# EUROPEAN PATENT SPECIFICATION

(11) **EP 0 836 185 B1**
(45) Date of publication and mention of the grant of the patent: **17.03.2004**
(21) Application number: 97307972.6
(22) Date of filing: 08.10.1997
(51) Int. Cl.: G11B 19/20, G11B 17/028

(54) **Self-compensating dynamic balancer apparatus for a disk player**
Selbstkompensierende dynamische Auswuchtvorrichtung für Plattenspieler
Dispositif d'équilibrage dynamique automatique pour tourne-disques

(30) Priority: 09.10.1996 KR 9644932; 10.01.1997 KR 9700503
(43) Date of publication of application: 15.04.1998
(60) Divisional application: 03011697.4
(73) Proprietor: Samsung Electronics Co., Ltd., Suwon City, Kyungki-do (KR)
(72) Inventor: Sohn, Jin-seung, 2-1006 Shin Dong-A Apt., Seoul (KR); Ro, Dae-sung, 17-1209 Samho Apt., Anyang-city, Kyungki-do (KR)
(74) Representative: Robinson, Ian Michael

(56) References cited:
- EP-A- 0 829 872
- WO-A-98/03974
- PATENT ABSTRACTS OF JAPAN vol. 014, no. 376 (P-1092), 14 August 1990 & JP 02 139758 A (CANON INC), 29 May 1990
- PATENT ABSTRACTS OF JAPAN vol. 015, no. 266 (P-1223), 5 July 1991 & JP 03 086968 A (FUJITSU LTD), 11 April 1991

## Description

The present invention relates generally to the field of disk players, such as for a compact disc or a CD-ROM. More particularly, the invention relates to a self-compensating dynamic balancer for restricting internal vibrations generated due to an eccentric center of gravity of a disk. Particular embodiments of the invention relate to a disk player having a turntable incorporating the self-compensating dynamic balancer, and/or a clamper incorporating the self-compensating dynamic balancer. The present invention also relates to optical disk players for recording and/or reproducing an optical disk.

In general, a disk player records and/or reads information onto and/or from a recording medium such as a compact disk (CD), a CD-ROM or a digital versatile disk (DVD). Due to its sensitivity, the disk player is desired to protect the disk and optical pickup from external impacts and internal vibrations.

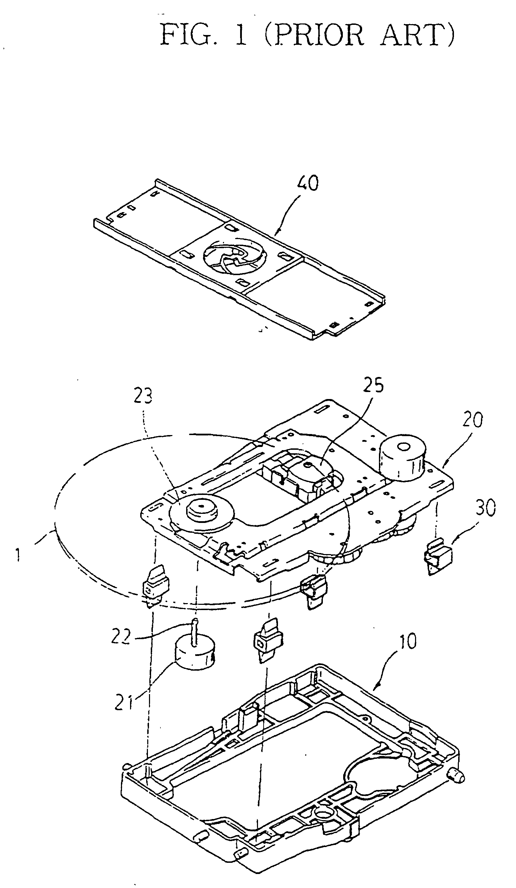

A typical disk player, as shown in FIG. 1, includes a deck base 10 hingedly-coupled to a housing (not shown) so as to be capable of rotating in a vertical plane, a deck plate 20 coupled to the deck base 10, a spindle motor 21 located on the deck plate 20 for providing a rotational force to a disk 1, a turntable 23 coupled to a rotational shaft 22 of the spindle motor 21 for accommodating the disk 1, a clamper 40 installed on the inner surface of the upper portion of the housing to face the turntable 23 for securing the disk 1 placed on the turntable 23, and an optical pickup 25 coupled to the deck plate 30 so as to be capable of moving across the disk 1 for performing recording and reproduction operations.
The disk player includes buffering members 30 disposed between the deck base 10 and the deck plate 20 to inhibit any external vibrations transferred through the deck base 10 from being transferred directly to the deck plate 20, the spindle motor 21 and the optical pickup 25. The buffering member 30 is formed of a material such as soft rubber or polyurethane which can absorb external impacts.

The disk player adopting the buffering member 30 as above can effectively protect the driving of the disk 1 and the optical pickup 25 from external impacts. However, the dampening internal vibrations generated by the rotation of the spindle motor 21 due to an eccentric center of gravity of the disk is not taken into consideration. Commonly, an eccentric center of gravity of the disk is caused by a discrepancy between the rotational center of the disk and the center of gravity of the disk due to errors in the manufacturing process of the disk. Thus, the rotational shaft of the spindle motor 21 revolves because of whirling i.e. is caused to move in a horizontal plane so as to orbit its normal axis of rotation.

Such orbital movement of the rotational shaft of the spindle motor does not effect a low-speed disk player such as a 1X or 2X type. However, in the case of a high-speed model such as a 6X, 8X, 12X, 20X or 24X type, the effects of movement of the spindle motor become serious making recording/reproducing of information difficult.

To overcome the above problems, in a conventional high-speed disk player, the mass of the deck plate where the spindle motor is installed is increased or the rigidity of the buffering member is increased to reduce movements of the deck plate due to the eccentric center of gravity of the disk.

However, increasing the mass the deck plate is not appropriate for a high-speed rotation. Also, the costs of the product increase and miniaturization of the product is hindered. Further, when the rigidity of the buffering member is increased, it is not possible to effectively dampen the external impacts or vibrations.

The Japanese patent abstracts JP 01239758 and JP 03086968 describe a device for adjusting inequilibrium of rotation of information recording medium and a balance correcting mechanism for magnetic disk drive respectively, bath using fluid to balance an information recording medium.

To solve the above problems, it is an aim of preferred embodiments of the present invention to provide a disk player in which external vibrations can be reduced and also internal vibrations generated due to an eccentric center of gravity of a disk can be limited. A further preferred aim is to achieve such limitation of internal and external vibrations without causing an increase in weight of the disk player.

According to the present invention in a first aspect, there is provided a self-compensating dynamic balancer apparatus for a disk player having rotational components for rotating a disk about a rotation axis to record and reproduce information from the disk, said apparatus characterised comprising:
A self-compensating dynamic balancer locatable co-axial with said rotational axis too rotate in use with at least one of said rotational components, said self-compensating dynamic balancer comprising a mobile unit arranged to be freely movable within a hollow non-magnetic tube by centrifugal force generated by rotation of said disk such that the center of gravity of said self-compensating dynamic balancer moves to be located opposite to the center of gravity of said disk with respect to said rotational axis; and
characterised in that:
said mobile unit includes at least one rigid body.

Suitably, the apparatus further comprises a fluid capable of moving within said tube.

Suitably, said fluid is arranged to coat said at least one rigid body to reduce friction between said at least one rigid body and said hollow tube.

Suitably, said tube is formed of a body having a race in which said mobile unit is disposed and a cover member which covers said race by coupling to said body.

Suitably, the apparatus comprises at least two circular tubes which are arranged to be concentric and adjacent to each other and have mobile units located in the respective tubes.

Suitably, when there is more than one tube, the weights of said rigid bodies located in the respective tubes differ from each other.

Suitably, said rigid body is formed into a shape selected from the group consisting of a spherical body which can roll inside said race, a cylindrical body which can roll with the outer circumferential surface thereof contacting the inner surface of the outer circular wall of said race, a truncated conic body which can roll with the outer circumferential surface thereof contacting the bottom surface of said race, and a fan-shaped block which can slide being in contact with the bottom surface or the outer circular wall of said race.

Suitably, said rigid body is formed of a non-magnetic material in order to avoid being influenced by a magnetic force.

Suitably, said rigid body is formed of a substance selected from the group consisting of tungsten carbide (WC), beryllium steel (CuBe), Hastelloy C-276, silicon nitride (Si₃N₄), zirconia (ZrO₂), brass, aluminium, austenite-series steel YHD50, a non-magnetic metal such as SUS300, SUS304 and SUS316, ceramic and a synthetic resin.

Suitably, said rigid body is formed of a non-oxidizing substance which does not corrode.

Suitably, said rigid body is formed of a substance selected from the group consisting of SUS300, ceramic and a synthetic resin.

Suitably, the outer circumferential surface of said rigid body is anti-oxidation coated.

Suitably, said anti-oxidation coating is formed of one selected from the group consisting of zinc and nickel-chromium plated over a base material of carbon steel or chromium steel.

Suitably, said fluid capable of moving in said tube comprises part of said mobile unit such that the center of gravity thereof is located opposite to that of said disk with respect to said rotation axis by a centrifugal force generated during rotation of said tube.

Suitably, the cross section of said tube enclosing said mobile unit has a shape selected from the group consisting of a rectangular shape, an oval shape having a longer axis in the latitudinal direction with respect to the rotation shaft, and an inwardly bulging polygonal shape in which a portion of each side contacting said mobile unit bulges inward.

Suitably, said tube enclosing said mobile unit is formed of a substance selected from the group consisting of tungsten carbide (WC), beryllium steel (CuBe), Hastelloy C-276, silicon nitride (Si₃N₄), zirconia (ZrO₂), brass, aluminium, austenite-series steel YHD50, a non-magnetic metal such as SUS300, SUS304 and SUS316, ceramic and a synthetic resin.

Suitably, said tube enclosing said mobile unit is formed of a non-oxidizing substance which does not corrode.

Suitably, said tube enclosing said mobile unit is formed of a substance selected from the group consisting of SUS300, ceramic and a synthetic resin.

Suitably, the surface of said tube facing said mobile unit is anti-oxidation coated.

Suitably, said anti-oxidation coating is formed of one selected from the group consisting of zinc and nickel-chromium plated over a base material of carbon steel or chromium steel.

Suitably, the apparatus comprises a support plate and at least one pivoting plate pivotably coupled to said support plate.

Suitably, said self-compensating dynamic balancer is formed integrally with a turntable.

Suitably, there is provided a turntable incorporating such a self-compensating dynamic balancer, comprising:
a placing member having a coupling hole which is coupled to a rotation shaft of a motor and a surface on which a disk is placed, said placing member being rotated by rotation of said motor;
a coupling protrusion which is formed on said placing member to project therefrom and onto which the center hole of a disk fits;
at least one circular race which is formed in said placing member and rotates around the center of.rotation of said placing member;
a mobile unit which is placed inside said race to be capable of moving; and
a cover member to covering an opening of said race.

Suitably, said coupling protrusion includes an installation groove which is formed inside the same and a magnet which is inserted in said installation groove.

Suitably, said self-compensating dynamic balancer is formed integrally with a clamper.

There is suitably provided a clamper incorporating such a self-compensating dynamic balancer comprising:
a clamper main body;
a pressing unit coupled to said clamper main body for pressing a disk placed on a turntable;
at least one annular race which is formed in said clamper main body and rotates around the center of rotation of said clamper main body;
a mobile unit placed inside said race to be capable of moving; and
a cover member which covers an opening of said race.

Suitably, the bottom surface of said clamper main body contacts said disk, and said pressing unit is a yoke member which is coupled to the lower portion inside said clamper main body in order to press said disk by a magnetic attractive force with a magnet in said turntable.

Suitably, said pressing unit includes a pressing.plate installed at the bottom surface of said clamper main body to be capable of moving up and down for pressing said disk, and an elastic member which is interposed between said clamper main body and said pressing plate such that said pressing plate can elastically press against said disk.

Suitably, said placing member and said cover member, or said clamper main body and said cover member or said case and said cover member, respectively, are formed of a non-magnetic material in order to avoid being influenced by a magnetic force.

Suitably, said placing member and said cover member, or said clamper main body and said cover member or said case and said cover member, respectively, are formed of a substance selected from the group consisting of tungsten carbide (WC), beryllium steel (CuBe), Hastelloy C-276, silicon nitride (Si₃N₄), zirconia (ZrO₂), brass, aluminium, austenite-series steel YHD50, a non-magnetic metal such as SUS300, SUS304 and SUS316, ceramic and a synthetic resin.

Suitably, said placing member and said cover member, or said clamper main body and said cover member or said case and said cover member, respectively, are formed of a non-oxidizing substance which does not corrode.

Suitably, in said placing member and said cover member, or said clamper main body and said cover member or said case and said cover member, respectively, are formed of a substance selected from the group consisting of SUS300, ceramic and a synthetic resin.

Suitably, in said placing member and said cover member, or said clamper main body and said cover member or said case and said cover member, respectively, the surfaces facing said rigid body are anti-oxidation coated.

Suitably, said anti-oxidation coating is formed of one selected from the group consisting of zinc and nickel-chromium plated over a base material of carbon steel or chromium steel.

Further, there is suitably provided a disk player incorporating such a self compensating dynamic balancer, wherein the disk player comprises:
a deck base;
a deck plate elastically coupled to said deck base;
a buffering member interposed between said deck base and said deck plate for protecting said deck plate from external impacts;
a spindle motor arranged on said deck plate for providing a rotational force to a disk;
a turntable arranged on a rotation shaft of said spindle motor for accommodating the disk;
a clamper for holding the disk in place on said turntable; and
an optical pickup coupled to said deck plate and capable of moving across the disk; and
said self-compensating dynamic balancer is coupled to at least one among the spindle motor, the turntable and the clamper which are rotated by the rotational force provided by said spindle motor, the center of gravity thereof being located opposite to that of said disk with respect to the rotation shaft of said spindle motor by the centrifugal force generated during rotation of said disk.

According to another aspect of the invention there is provided a optical disk player for recording and/or reproducing an optical disk, the optical disk player comprising: a balancer mounted rotably with a loaded optical disk and having a non-magnetic tube containing therein a balancing member, the balancing member always being free to move with respect to the tube, wherein said optical disk player is arranged to drive an optical disk for rotation at a frequency higher that the natural frequency, and said balancer is arranged to reduce vibration due to imbalance of said optical disk; characterised in that the balancing member comprises at least one rigid body.

For a better understanding of the invention, and to show how embodiments of the same may be carried into effect, reference will now be made, by way of example, to the accompanying diagrammatic drawings, in which:
Figure 1 is an exploded perspective view schematically illustrating a conventional disk player;
Figure 2 is an exploded perspective view illustrating a disk player according to an embodiment of the present invention;
Figures 3A through 3C are diagrams showing the relationship between an eccentric center of gravity position of a disk, the position of a rotation shaft and the center of rotation respectively according to different rotation speeds of the disk;
Figure 4 is a perspective view illustrating a first embodiment of a self-compensating dynamic balancer;
Figure 5 is a cross sectional view of the self-compensating dynamic balancer shown in Figure 4 when a rigid body is used as a mobile unit;
Figure 6 is a cross sectional view of the self-compensating dynamic balancer shown in Figure 4 when a rigid body and a fluid are used as the mobile unit;
Figures 7 and 8 are cross sectional views of self-compensating dynamic balancers including first and second races, respectively;
Figures 9 through 12 are cutaway perspective views schematically illustrating the shapes of a rigid body which is used as the mobile unit for the self-compensating dynamic balancer;
Figures 13 through 16 are sectional views schematically illustrating the race and a cover member of the self-compensating dynamic balancer;
Figure 17 is a sectional view illustrating a second embodiment of a self-compensating dynamic balancer;
Figure 18 is a sectional view taken along line A-A of Figure 17;
Figure 19 is an exploded perspective view illustrating a turntable incorporating the first embodiment of the self-compensating dynamic balancer;
Figure 20 is a sectional view of the turntable incorporating a self-compensating dynamic balancer shown in Figure 19 when a rigid body and a fluid are employed as a mobile unit of the self-compensating dynamic balancer;
Figure 21 is a sectional view showing a second embodiment of a turntable incorporating a self-compensating dynamic balancer;
Figure 22 is an exploded perspective view of a first embodiment of a clamper incorporating a self-compensating dynamic balancer;
Figure 23 is a sectional view of the clamper incorporating a self-compensating dynamic balancer shown Figure 22 when a yoke is employed as a pressing unit;
Figure 24 is a sectional view of the clamper incorporating a self-compensating dynamic balancer shown Figure 22 when a pressing plate and an elastic member are employed as a pressing unit;
Figure 25 is a sectional view of the clamper incorporating a self-compensating dynamic balancer shown Figure 22 when a rigid body and a fluid are employed as a mobile unit;
Figure 26 is a sectional view showing a second embodiment of a clamper incorporating a self-compensating dynamic balancer;
Figure 27 is an exploded perspective view of a first spindle motor for use with a self-compensating dynamic balancer;
Figure 28 is a sectional view of the spindle motor shown in Figure 27 when a rigid body is employed as a mobile unit in the self-compensating dynamic balancer;
Figure 29 is a sectional view of the spindle motor shown in Figure 27 when a rigid body and a fluid are employed as a mobile unit in the self-compensating dynamic balancer;
Figure 30 is an exploded perspective view of a second spindle motor for use with a self-compensating dynamic balancer; and
Figures 31A and 31B are diagrams showing the relationship between the eccentric center of gravity position of a disk, the position of the rotation shaft and the ideal center of rotation respectively according to different rotation speeds of the disk of the disk player having a self-compensating dynamic balancer.

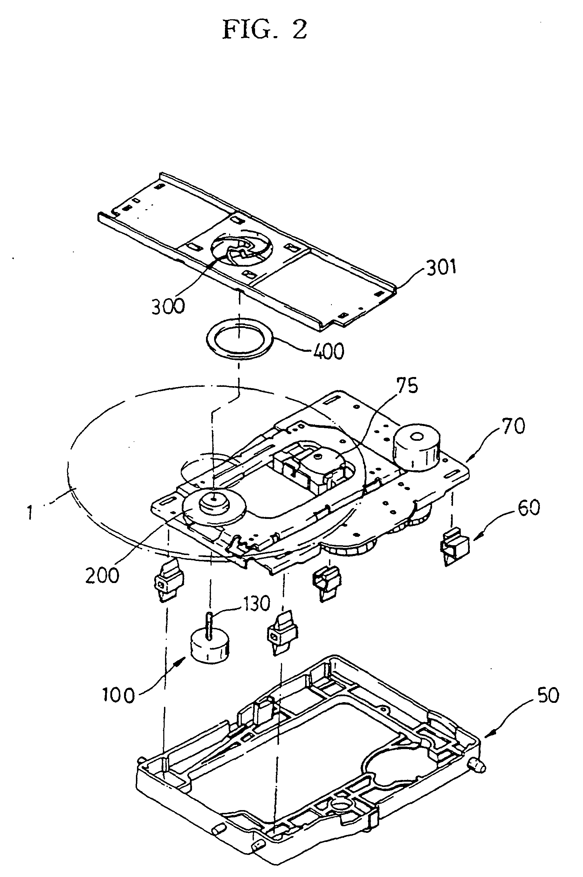

As shown in Figure 2, the disk player according to a preferred embodiment of the present invention comprises a deck base 50, a deck plate 70 elastically coupled to the deck base 50, a buffering member 60 interposed between the deck base 50 and the deck plate 70, a spindle motor 100 installed at the deck plate 70, a turntable 200 and an optical pickup 75, a clamper 300 installed to face the turntable 200 for holding a disk 1 placed on the turntable 200, and a self-compensating dynamic balancer 400 for preventing eccentric rotation of a rotation shaft 130 of the spindle motor 100 due to an eccentric center of gravity of the disk 1.

The deck plate 70 receives externally delivered impacts through the deck base 50 which are alleviated by the buffering member 60. Accordingly, it is preferable that the buffering member 60 is formed of material exhibiting low rigidity such as soft rubber or polyurethane in order to alleviate external vibrations delivered from the deck base 50. Also, the deck plate 70 is preferably light for realizing miniaturization thereof. The spindle motor 100 provides a rotational force to rotate the disk 1. The center of the turntable 200 is fixed to the rotation shaft 130 and the disk 1 is placed on the upper surface of the turntable 200 during operation. The clamper 300 facing the spindle motor 100 prevents unnecessary movements of the disk 1 placed on the spindle motor 100. The turntable 200 is fixed to the rotation shaft 130 and rotated according to the spindle motor 100. Thus, the disk 1 and the clamper 300 rotate together.

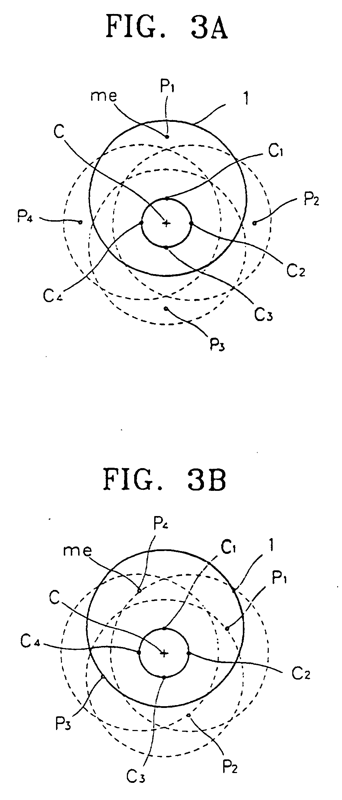

Referring to Figures 3A through 3C, the relationship between the eccentric center of gravity position of a disk, the position of the rotation shaft and the ideal center of rotation according to the rotation speed of the disk will now be described.

Figure 3A is a diagram schematically showing the orbital and rotational movements of the disk when the rate of orbital rotation of the spindle motor is equal to or less than the natural frequency of the deck plate.
Here, the natural frequency is determined by the elastic modulus of the buffering member and mass of the deck plate and other elements to be installed on the deck plate, and represents the rate of vibration in a horizontal direction, i.e., in a direction parallel to the plane of the disk. As, shown in the drawing, when an eccentric center of gravity mₑ, exists at a position p₁ spaced apart by a predetermined distance from the ideal rotation center c₁ of the disk 1, the ideal rotation center c₁ of the disk rotates around a center c, moving to positions c₂, c₃ and c₄. The positions of the eccentric center of gravity mₑ of the disk corresponding to each of the ideal rotation center positions c₂, c₃ and c₄ respectively are p₂, p₃ and p₄. In this case, the respective positions p₁, p₂, p₃ and p₄ of the eccentric center of gravity mₑ and the revolution center c of the disk 1 are located opposite each other with respect to each of the ideal rotation center positions c₁, c₂, c₃ and c₄ of the disk 1.

Figure 3B is a diagram schematically showing the orbital and rotational movements of the disk when the rate of revolution of the spindle motor is near the natural frequency of the deck plate. As shown in the drawing, the revolution center c is located in a direction perpendicular to that of the respective eccentric center of gravity positions p₁, p₂, p₃ and p₄ with respect to positions c₁, c₂, c₃ and c₄.

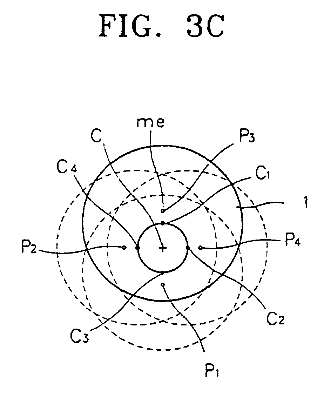

Figure 3C is a diagram schematically showing the orbital and rotational movements of the disk when the rate of revolution of the spindle motor is greater than the natural frequency of the deck plate, which corresponds to the normal rotation speed of a disk allowing information to be recorded onto or read from the disk. As shown in the drawing, the revolution center c is located in the same direction as the respective eccentric center of gravity positions p₁, p₂, p₃ and p₄ with respect to positions c₁, c₂, c₃ and c₄.

The self-compensating dynamic balancer (400 of Figure 2) is provided to compensate for the eccentricity of the disk. The self-compensating dynamic balancer 400 is incorporated into at least one of the rotor of the spindle motor 100, the rotational shaft 130, the turntable 200 and the clamper 300 which are rotated by the rotational force provided from the spindle motor 100.

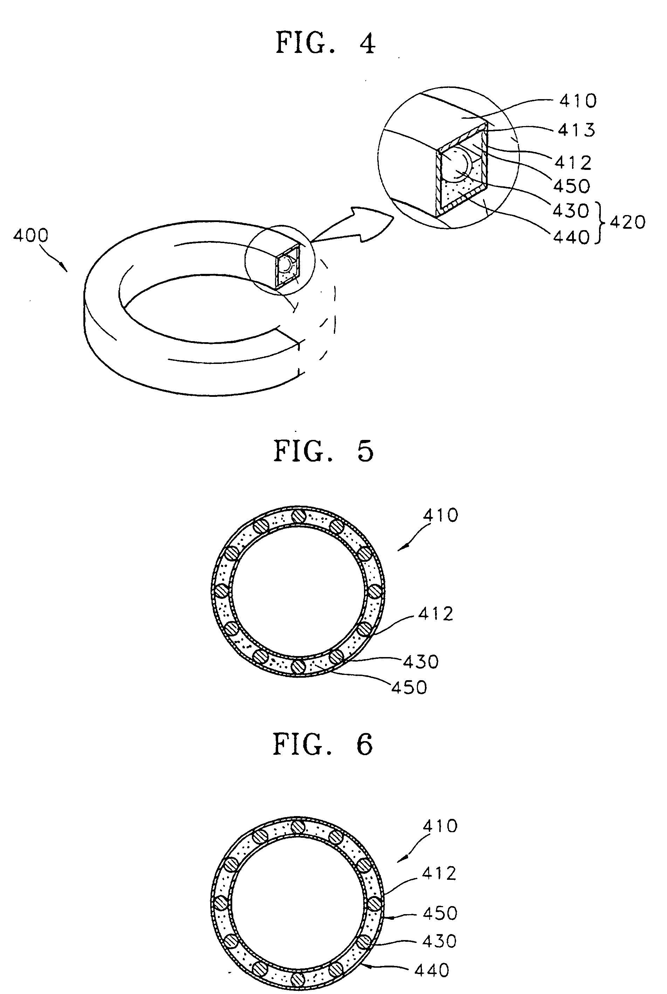

As shown in Figure 4, a first embodiment of the self-compensating dynamic balancer 400 includes a circular tube 410 whose cross-section is rectangular having a race 450 and a mobile unit 420 movably disposed inside the race 450.

The tube 410 includes a main body 412 through which the race 450 is formed and a cover member 413 for sealing the race 450 in a state in which a mobile unit 420 is sealed therein. The tube 410 rotates coaxial with the rotation shaft 130.

The coupling between the cover member 413 and the main body 412 is made such as by using an adhesive, by forming a corresponding groove and protrusion on the cover member 413 and main body 412 or by a screw. The detailed description thereof will be omitted since such coupling methods are well known.

The mobile unit 420 includes a plurality of rigid bodies 430 and may further include a fluid 440 which can move outward from the rotational center by a centrifugal force generated during rotation of the tube 410.

Figure 5 shows the race 450 in which a plurality of rigid bodies 430 are included as the mobile unit 420.

Each rigid body 430 is installed to be capable of freely rolling or sliding so that the position thereof can be determined by the centrifugal force during rotation of the tube 410.

Figure 6 shows the race 450 in which a plurality of the rigid bodies 430 and the fluid 440 are included.

Since the fluid 440 has a large contact area with the race 450 and the cover member 413 (see Figure 4) and exhibits a very high viscosity compared to the rigid body 430 only, the fluid 440 employed with the rigid body 430 in the race 450 can effectively compensate for an internal vibratory force generated due to the eccentric center of gravity of the disk 1 (see Figure 2). That is, the orbital revolution of the rotation shaft 130 due to the eccentric center of gravity mₑ of the disk can be roughly balanced and reduced by the movements of the rigid bodies 430 and finely balanced and reduced by the fluid 440.

Here, the amount of fluid 440 included can range from an amount which coats the outer surface of the rigid body 430 to a thickness of only a few microns. In this case, the fluid 440 reduces friction between the rigid body 430, the race 450 and the cover member 414, rather than actually contributing to balancing.

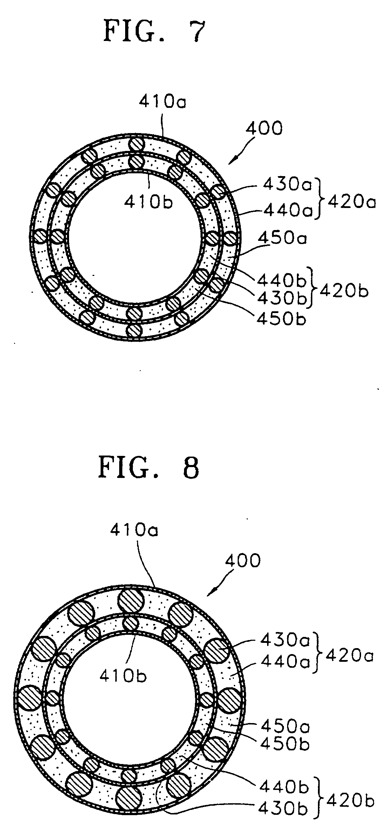

As shown in Figure 7, the second embodiment of the self-compensating dynamic balancer includes first and second rectangular cross-sectioned tubes 410a and 410b arranged concentric and adjacent to each other and first and second mobile units 420a and 420b respectively disposed inside the first and second tubes 410a and 410b to be capable of moving.

The respective first and second tubes 410a and 410b independently serve as a balancer and can finely balance and reduce the orbits of the rotation shaft 430.
Here, each of the first and second mobile units 420a and 420b is the same as that of the mobile unit 420 described with reference to Figures 5 and 6.

The first and second tubes 410a and 410b and the mobile units 420a and 420b respectively installed therein can be configured as shown in Figure 8. That is, the width and height of the first race 450a formed in the first tube 410a can be configured different from those of the second race 450b formed in the second tube 410b. Also, the size and density of the first and second mobile units 420a and 420b located in the first race 450a and the second race 450b, respectively, can be made different from each other. Again, each of the first and second mobile units 420a and 420b is the same as the mobile unit 420 described with reference to Figures 5 and 6.

When the first race 450a is formed to have a width and height greater than the second race 450b and the first mobile unit 420a which is heavier than the second mobile unit 420b is employed, the first mobile unit 420a roughly balances and reduces the orbital rotation of the rotation shaft 130 due to the eccentric center of gravity mₑ of the disk 1 and then the second mobile unit 420b finely balances and reduced the orbital rotation of the rotation shaft 130.

The self-compensating dynamic balancer described with reference to Figures 7 and 8 can have two or more tubes.

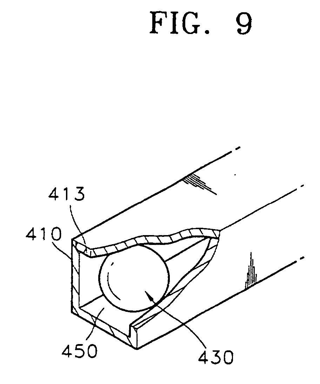

Figures 9 through 11 show different shapes and arrangements of the rigid body as rigid bodies 430, 430', and 430" installed inside the race 450.

Figure 9 shows a case in which the rigid body 430 is spherical.

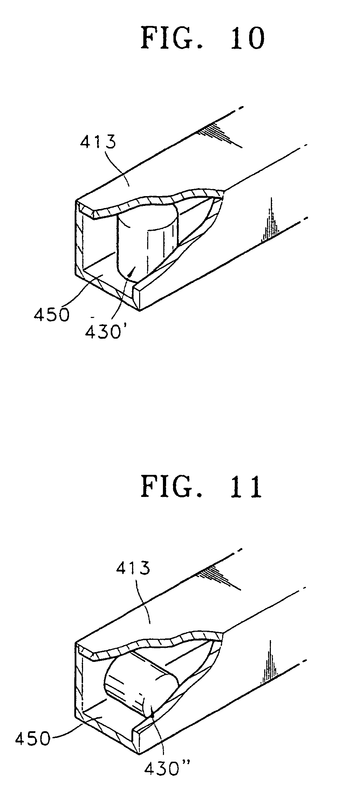

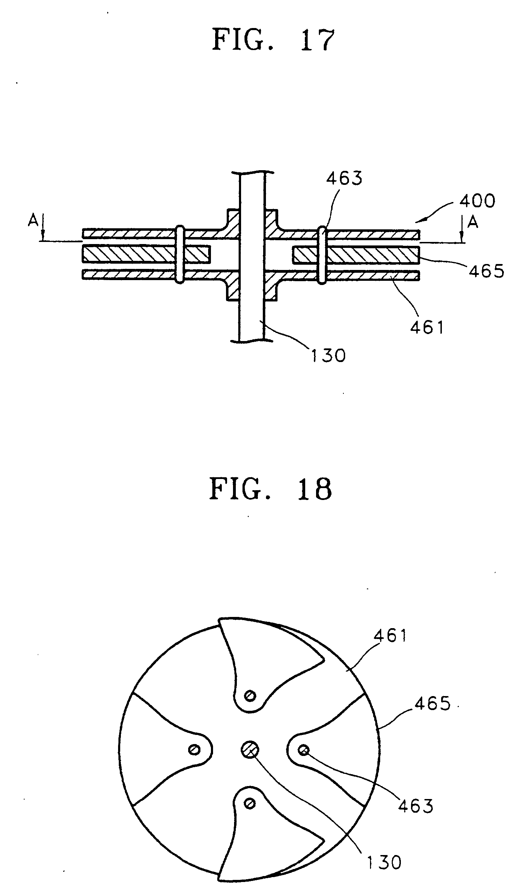

Figure 10 shows a case in which the rigid body is cylindrical. The cylindrical rigid body 430' is formed to be capable of rolling with the outer surface of the cylindrical rigid body 430' contacting the inner surfaces of the inner and outer walls of the race 450. In this case, the upper and lower flat surfaces of the cylindrical rigid body 430' may slide in contact with the race 450 generating friction therebetween. In consideration of the above, it is preferable that the race 450 has the shape shown in Figure 16 which will be described later.

Figure 11 shows a case in which the rigid body is a truncated conic body 430" which can roll with the outer conic surface contacting the bottom surface of the inside of the race 450.

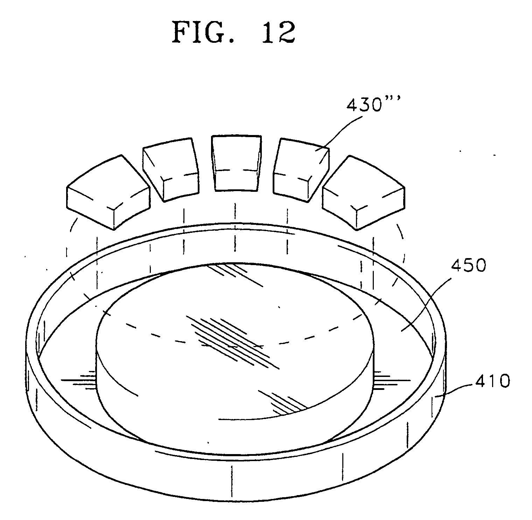

Also, Figure 12 shows a case in which the rigid body is a fan-shaped block 430'" which is inserted to be capable of sliding while contacting the bottom surface and the outer circumferential surface inside the race 450.

Also, the shape of the rigid body 430 may be modified into other shapes as long as the body can freely move inside the race 450.

Here, when being influenced by a magnetic force, there may be a possibility that the rigid body 430 cannot roll smoothly due to magnetic attraction. Accordingly, it is preferable that the rigid body 430 is formed of a non-magnetic substance so that the rigid body 430 is not influenced by a magnet (not shown).

Preferably, the rigid body 430 is formed of tungsten carbide (WC), beryllium steel (CuBe), Hastelloy C-276, silicon nitride (Si₃N₄), zirconia (ZrO₂), austenite-series stainless YHD50, a non-magnetic metal such as SUS300, SUS304 and SUS316, ceramic or a synthetic resin.

As described above, when the rigid body 430 is formed of a non-magnetic substance, the rigid body 430 is not influenced by a magnetic forces from an adjacent magnet. Thus, the rigid body 430 moves dependent only upon the position of the eccentric center of gravity of the disk 1 (see Figure 2) and the rotation of tube 410.

Further, the rigid body 430 is preferably formed of a non-oxidizing substance or anti-oxidation coated, since smooth rolling or sliding of the rigid body 430 inside the race 450 will be hindered by oxidation, i.e., corrosion.

For that purpose, the rigid body 430 can be formed of substance such as SUS300, ceramic or synthetic resin. Also, the outer surface of the rigid body 430 can be anti-oxidation processed by coating a base material of carbon steel or chromium steel with zinc or nickel-chromium plated.

Also, the rigid body 430 can be formed of a substance having fine particles when oxidized with the air, so that the movement of the rigid body 430 is not affected.

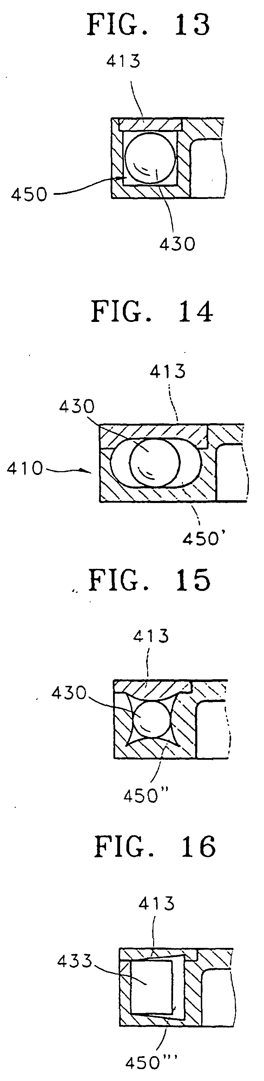

The shapes of the race 450 and the covers member 413 will now be described with reference to Figures 13 through 16.

As shown in Figure 13, it is preferable that the section through the race 450 and the cover member 413 is rectangular.

Alternatively, as shown in Figure 14, the cross-section of the race 450' and the cover member 413 may be an oval. Thus, by reducing the height of the tube 410, the internal vibratory force generated during rotation of the tube 410 can be effectively alleviated.

Also, as shown in Figure 15, the cross-section the race 450" may bulge inward. Such a case is very appropriate for minimizing the contact area between the rigid body 430 and the race 450.

Further, as shown in Figure 16, the inner wall of the race 450" is formed to be higher than the outer wall so that the upper and lower surfaces of the race 450 are at an angle. Thus, when the cylindric rigid body 430' (see Figure 10) is employed, sliding movements of the rigid body 430' inside the race 450'" can be minimized.

It is preferable that the tube 410 including a race 450 and a cover member 413 are formed of a non-magnetic substance to effectively prevent the influence of a magnetic force between the rigid body 430 and the race 450. That is, the tube 410 and the cover member 413 may be formed of substance such as tungsten carbide (WC), beryllium steel (CuBe), Hastelloy C-276, silicon nitride (Si₃N₄), zirconia (ZrO₂), brass, aluminium, austenite-series stainless YHD50, a non-magnetic metal such as SUS300, SUS304 and SUS316, ceramic or a synthetic resin.

Also, the tube 410 is preferably formed of a non-oxidizing substance such as SUS300, ceramic or a synthetic resin or anti-oxidation coated of zinc or by nickel-chromium plated over a base material of carbon steel or chromium steel.

As shown in Figures 17 and 18, a third embodiment of the self-compensating dynamic balancer 400 includes a support plate 461 perpendicularly fixed to the rotation shaft 130 and at least one pivoting plate 465 hinge-coupled to the support plate 461 being parallel to the same. Here, it is preferable that a pair of the support plates 461 are provided parallel with each other and the pivoting plate(s) 465 is(are) coupled therebetween. The pivoting plate 465 is pivot-coupled between the support plates 461 by a fixing pin 463.

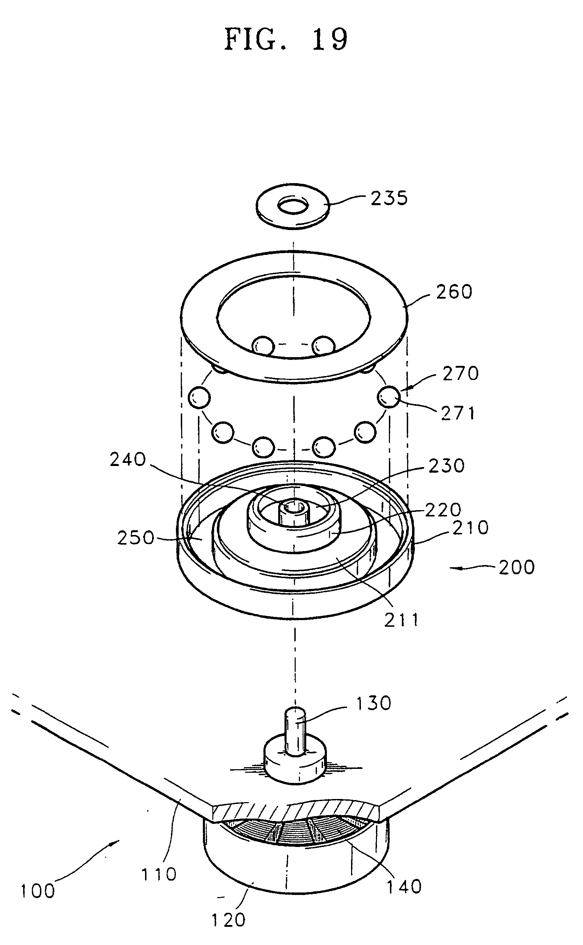

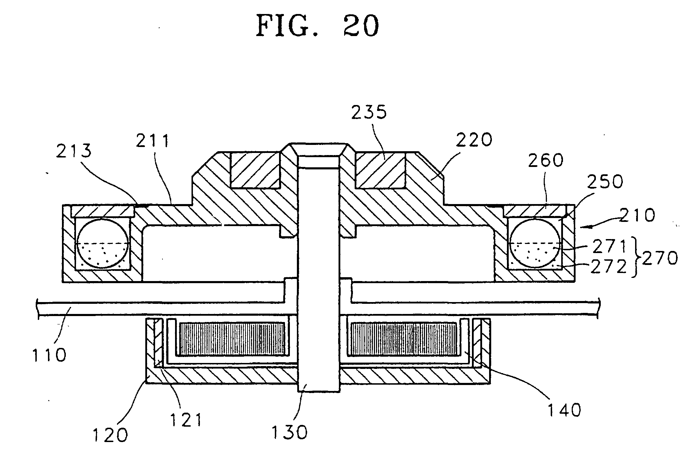

Referring to Figures 19 and 20, a turntable 200 incorporating the first embodiment of the self-compensating dynamic balancer 400 will now be described.

A placing member 210 of the turntable 200 is coupled to the rotation shaft 130 of the spindle motor 100. For that purpose, a coupling hole 240 is formed at the center of the placing member 210 so that the rotation shaft 130 inserts into and is fixed to the inside of the coupling hole 240. A circular locating protrusion 220 which fits through the center hole of the disk 1 (see Figure 2) is formed on an upper surface of the placing member 210. The locating protrusion 220 is concentric with the coupling hole 240. A circular race 250 is formed in the placing member 210 around the locating protrusion 220. A plurality of mobile units 270 which can move away from the rotation center of the placing member 210 due to a centrifugal force are inserted into the race 250. The race 250 is sealed by a cover member 260 with the mobile units 270 inside. After the cover member 260 is assembled onto the upper portion of the placing member 210, the upper surface of the cover member 260 is processed to be a flat surface appropriate for contact with the surface of the disk 1.

The cover member 260 and the placing member 210 are coupled using an adhesive, a groove and protrusion assembly, or a screw. A detailed description thereof will be omitted since such coupling techniques are well known. As shown in the drawing, an open portion of the race 250 can be formed on the entire upper surface of the race 250 or on a portion of the upper surface thereof being large enough to allow insertion of the mobile unit 270 into the race 250.

Also, the turntable 200 preferably includes a magnet 235 to firmly hold the disk 1 against the surface of the placing member 210 together with the clamper 301 (see Figure 2) by a magnetic attraction therebetween. The magnet 235 is inserted into an installation groove 230 formed between the coupling hole 240 and the locating protrusion 220.

A placing surface 211 processed to be a flat surface to contact the surface of the disk 1 is provided on upper surface of the placing member 210 between the race 250 and the locating protrusion 220. A frictional member 213 can be installed to increase the friction between the disk 1 and the placing surface 211 to prevent the slip of the disk 1 with respect to the placing member 210.

The mobile unit 270 consists of a plurality of rigid bodies 271 and/or a fluid 272 which can be moved away from the center of the placing member 210 due to the centrifugal force generated during rotation of the placing member 210.

Figure 19 shows an example in which a plurality of rigid bodies 271 are included as a mobile unit 270 inside the race 250. The rigid body 271 can freely roll or slide according to the centrifugal force during rotation of the placing member 210.

As in the embodiment shown with reference to Figures 9 through 12, the shape of the rigid body 271 located inside the race 250 is preferably spherical, cylindrical, has a truncated conic body or is a fan-shaped block. However, the shape of the rigid body 271 may be modified into other shapes as long as the body can freely move inside the race 250.

A fluid 272 can be further included together with the rigid body 271 as the mobile unit 270. Since the;fluid 272 has a larger contact area with respect to the race 250 and the cover member 260 and exhibits a very high viscosity compared to the rigid body 271, the fluid 272 employed with the rigid body 271 inside the race 250 can effectively compensate for an internal vibratory force generated due to the eccentric center of gravity of the disk 1 (see Figure 2).

Here, the fluid 272 can be included in variable amounts, from an amount sufficient to coat the outer surface of the rigid body 271 to the thickness of only a few microns. In this case, the fluid 272 reduces friction between the rigid body 271, the race 250 and the cover member 260.

Here, when the rigid body 271 is formed of the non-magnetic substance, the rigid body 271 is not influenced by the magnetic force from the magnet 235 installed inside the locating protrusion 220 or the magnet 235 around the placing member 210. Thus, the rigid body 271 moves smoothly dependent only upon the position of the eccentric center of gravity of the disk 1 and the rotation of the placing member 210.

Further, the rigid body 271 is preferably formed of a non-oxidizing substance or anti-oxidation coated, since: rolling or sliding of the rigid body 271 inside the race 250 is hindered by oxidation, i.e., corrosion. Also, the rigid body 271 can be formed of a substance having fine particles when oxidized in air, so that the movement of the rigid body 271 is not affected.

When, the fluid 272 is employed with the rigid body 271 as the mobile unit 270, the cover member 260 and the race 250 are sealed to each other to prevent leakage of the fluid 272.

As in the embodiment with reference to Figures 13 through 16, the section of the race 250 and the cover member 260 is a rectangular 450, an oval 450', or inwardly bulge 450". Also, the inner wall of the race 250 is formed to be higher than the outer wall of the same so that a race in which the upper and lower surfaces of the race 250 are at an angle is possible (as in race 450'").

It is preferable that the placing member 210 including race 250 and the cover member 260 are formed of a non-magnetic substance to effectively prevent the influence of a magnetic force between the rigid body 271 and the race 250. That is, the placing member 210 and the cover member 260 are formed of a substance such as tungsten carbide (WC), beryllium steel (CuBe), Hastelloy C-276, silicon nitride (Si₃N₄), zirconia (ZrO₂), brass, aluminium, austenite-series steel YHD50, a non-magnetic metal such as SUS300, SUS304 and SUS316, ceramic or a synthetic resin.

Also, the placing member 210 is preferably formed of a non-oxidizing substance such as SUS300, ceramic or a synthetic resin or anti-oxidation coated of zinc or by nickel-chromium plated over a base material of carbon steel or chromium steel.

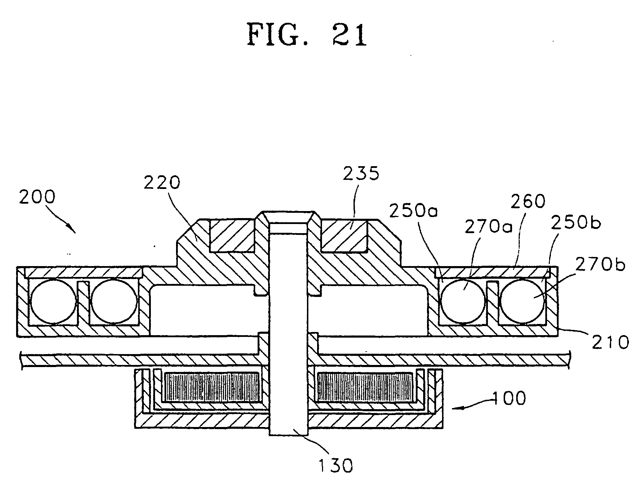

Referring to Figure 21, a turntable 200 incorporating the second embodiment of the self-compensating dynamic balancer will now be described.

As shown in the drawing, the turntable 200 includes a placing member 210, a locating protrusion 220 formed to be protruding from the center of the placing member 210 to insert into the center hole of the disk 1 (see Figure 2), a circular race 250 formed inside the placing member 210, a mobile unit 270 installed to be capable of moving inside the race 250, and a cover member 260 for covering the open portion of the race 250. Here, it is a characteristic feature that first and second races 250a and 250b are provided which are formed concentric and adjacent to each other with respect to the center of the placing member, differently from the first embodiment. First and second mobile units 270a and 270b shaped as described above are inserted into the first and second races 250a and 250b, respectively.

The mobile units 270a and 270b consist of one of a variously shaped rigid body 271 and/or a fluid 272 as described with reference to Figures 9 through 12. When the rigid body 271 is included as the mobile unit 270, it is preferable that the rigid body 271 is formed of a non-magnetic substance, a non-oxidizing substance, or is anti-oxidation coated. Also, the shape of each section of the first and second races 250a and 250b is one of those described with reference to Figures 13 through 16.

Here, it is preferable that the masses of the respective mobile units 270a and 270b inserted in the first and second races 250a and 250b are different from each other.

This is because of the consideration that a centrifugal force applied to the mobile unit 270 during the rotation of the placing member 210 is proportional to the respective mass of the mobile unit 270 and the distance between the center position of the mobile unit 270 and the rotation center of the placing member 210. That is, the diameters of the first and second races 250a and 250b and the mass of the mobile unit 270 are determined by considering the allowable error of the eccentric center of gravity of the disk.

Although the turntable 200 having two races 250a and 250b is described in Figure 21, the turntable can be provided with two or more races.

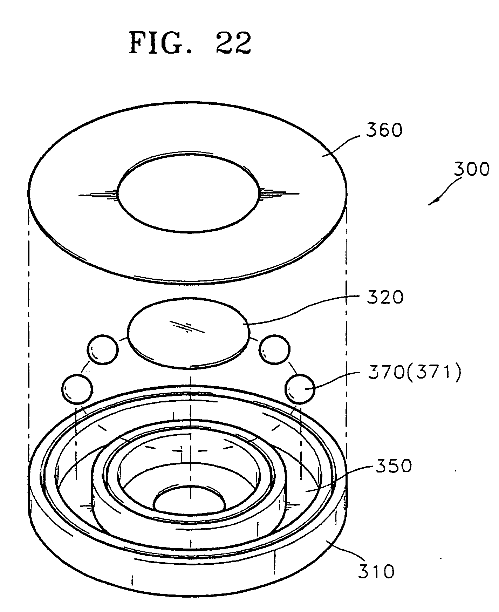

A clamper 300 incorporating the first embodiment of the self-compensating dynamic balancer will be described in detail with reference to Figures 22 through 26.

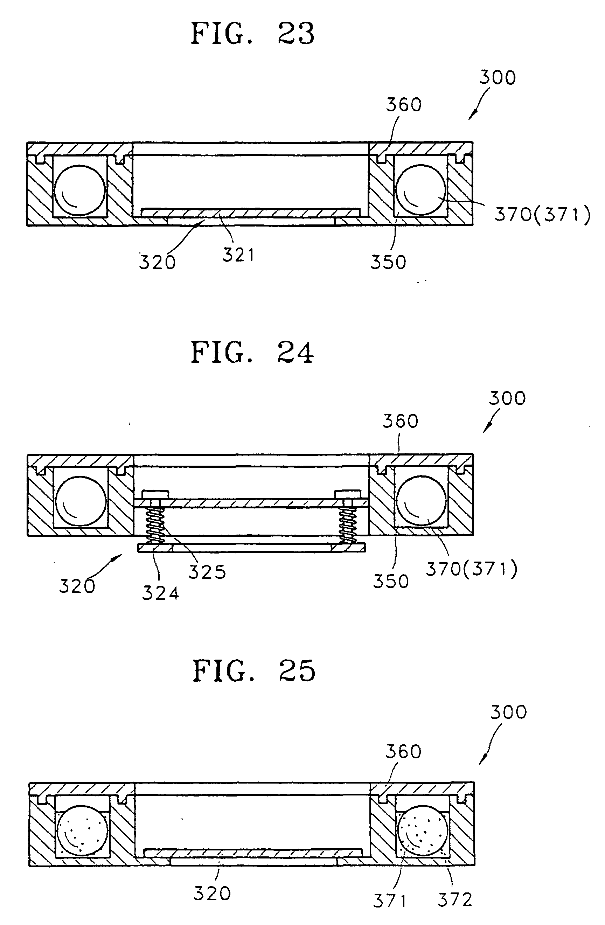

As shown in Figure 2, the clamper 300 incorporating a self-compensating dynamic balancer is positioned on the turntable 200 by the bracket 301 coupled with the deck base 50 and holds the disk 1 in place on the turntable 200. Referring to Figures 22 and 23, the clamper 300 incorporating a self-compensating dynamic balancer includes a clamper main body 310, a pressing unit 320, a race 350, a mobile unit 370 and a cover member 360. The clamper main body 310 is installed on the deck base 50 to perform a motion relative to the turntable 200. The pressing unit 320 is installed at the clamper main body 310 to press the disk 1 in place on the turntable 201. The race 350 is formed inside the clamper main body 310 and is concentric with the rotation center of the clamper main body 310. The mobile unit 370 is installed to be capable of moving inside the race 350 and moves toward the outer circumference of the clamper main body 310 due to a centrifugal force generated during the rotation of the clamper main body 310. The cover member 360 covers the open portion of the race 350.

The cover member 360 and the race 350 are coupled using an adhesive, a groove and protrusion assembly formed at corresponding positions, or a screw. A detailed description thereof will be omitted since such coupling techniques are well known.

As shown in the drawing, the open portion of the race 350 can be formed on the entire upper surface of the race 350 or on a portion of the upper surface thereof being large enough to allow the mobile unit 370 to insert into the race 350.

The pressing unit 320 can be a yoke 321 coupled to the lower portion inside the clamper main body 310 as shown in Figure 23.

As shown in Figures 19 through 21, when the magnet 235 is provided to the turntable 200, the yoke 321 presses the disk 1 (see Figure 2) using the mutual magnetic attraction with the magnet 235.

Also, the pressing unit 320 may be a pressing plate 324 and an elastic member 325, as shown in Figure 24. The pressing plate 324 is installed at the lower surface of the clamper main body 310 to be capable of moving up and down. The elastic member 325 is interposed between the clamper main body 310 and the pressing plate 324 to allow the pressing plate 324 to elastically press the disk 1 (see Figure 2).

Accordingly, when the turntable 200 moves relatively to the clamper main body 310, e.g., the turntable 200 is lifted while the clamper main body 310 is stationary so that the turntable is in proximity with the clamper main body 310 and the disk 1 placed on the turntable 200 is held by the pressing unit 320. Consequently, the clamper main body 310 rotates, being engaged with the rotating turntable.

The mobile unit 370 includes a plurality of rigid bodies 371 and may further include a fluid 372 to move away from the rotation center of the rotating clamper main body by the centrifugal force inside the race 350.

Figures 22 through 24 showcases in which a plurality of rigid bodies 371 are included inside the race 350 as the mobile unit 370. The rigid body 371 is installed to be capable of freely rolling or sliding such that the position thereof can be determined by the centrifugal force during rotation of the placing member.

It is preferable that the rigid body 371 is spherical, cylindrical, has a truncated conic shape, or is a fan-shaped block, as shown in Figures 9 through 12. However, the shape of the rigid body 371 may be modified on the condition that the rigid body 371 can freely move inside the race 350.

As shown in Figure 25, the fluid 372 can be further comprised along with the rigid body 371 as the mobile unit 370. Since the fluid 372 has a large contact area with respect to the race 350 and the cover member 360 and exhibits very high viscosity compared to the rigid body 371, the fluid 372 employed with the rigid body 371 inside the race 350 can effectively compensate for an inside vibratory force generated due to the eccentric center of gravity of the disk 1 (see Figure 2).

Here, it is preferable that the rigid body 371 is formed of a non-magnetic substance to be free from influence of the magnetic force of the magnet 235 (see Figure 19). In this case, the movement of the rigid body 371 is determined dependent only on the eccentric center of gravity position of the disk 1 and the rotation of the clamper main body 310.

Also, the rigid body 371 is preferably formed of a non-oxidizing substance or is anti-oxidation coated to prevent the smooth rolling or sliding of the rigid body 371 inside the race 350 from being hindered by oxidation, i.e., corrosion. Also, the rigid body 371 can be formed of a substance having fine particles when oxidized in air, so that the movement of the rigid body 371 is not affected.

The shapes of a portion formed by the race 350 and the cover member 360 where the mobile unit 370 is a shape described with reference to Figures 13 through 16. That is, the cross section has a rectangular shape, an oval shape, or an inwardly bulging shape.

Also, it is preferable that the clamper main body 310 including the race 350 and the cover member 360 are formed of a non-magnetic substance to be free from influence of a magnetic force generated between the rigid body 371 and the race 350. Further, the clamper main body 310 is preferably formed of a non-oxidizing substance or is anti-oxidation coated.

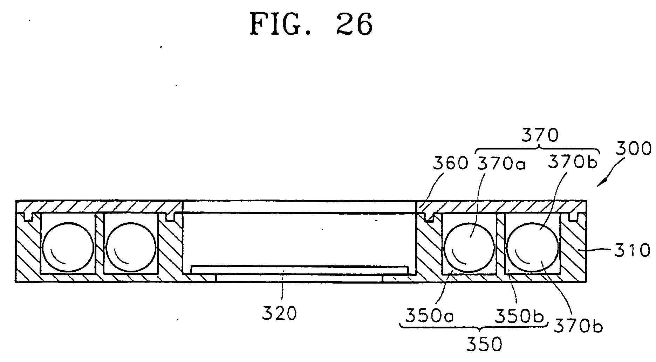

Referring to Figure 26, the clamper 300 incorporating the second embodiment of the self-compensating dynamic balancer will now be described.

As shown in the drawing, the clamper 300 includes a clamper main body 310, a pressing unit 320 installed at the clamper main body 310 and which presses the disk 1 (see Figure 2) in place on the turntable 200, a circular race 350 formed inside the clamper main body 310 and concentric with the rotation center of the clamper main body 310, a mobile unit 370 installed to be capable of moving inside the race 350, and the cover member 360 for covering an open portion of the race 350. Here, a characteristic feature of the present embodiment which distinguishes it from the first embodiment is that first and second races 350a and 350b formed adjacent to each around the rotation center of the clamper main body 310 (see Figure 4) are provided as the race 350.

As described referring to Figures 9 through 12, the mobile unit 370 includes a rigid body 371 of various shapes and may further include a fluid 372. In the case that the rigid body 371 is included as the mobile unit 370, it is preferable that the rigid body 371 is formed of a non-magnetic, non-oxidizing substance, or is anti-oxidation coated. Also, the sectional shapes of each of the first and second races 350a and 350b are the same as those described earlier referring to Figures 13 through 16.

Here, it is preferable that each of the mobile units 370a and 370b respectively located in the first and second races 350a and 350b have a different weight.

This is because of the consideration that the centrifugal force applied to the mobile units 370a and 370b during the rotation of the clamper main body 310 is proportional to the mass of the respective mobile unit 370 and the distance between the center of the mobile unit 370 and the center of rotation of the clamper main body 310. That means that the diameters of the first and second races 350a and 350b and the mass of the mobile unit 370a and 370b are determined considering the allowable error of the disk eccentric center of gravity.

Although Figure 26 shows the clamper having two races 350a and 350b, it is possible to have two or more races 350 provided to the clamper incorporating a self-compensating dynamic balancer 300.

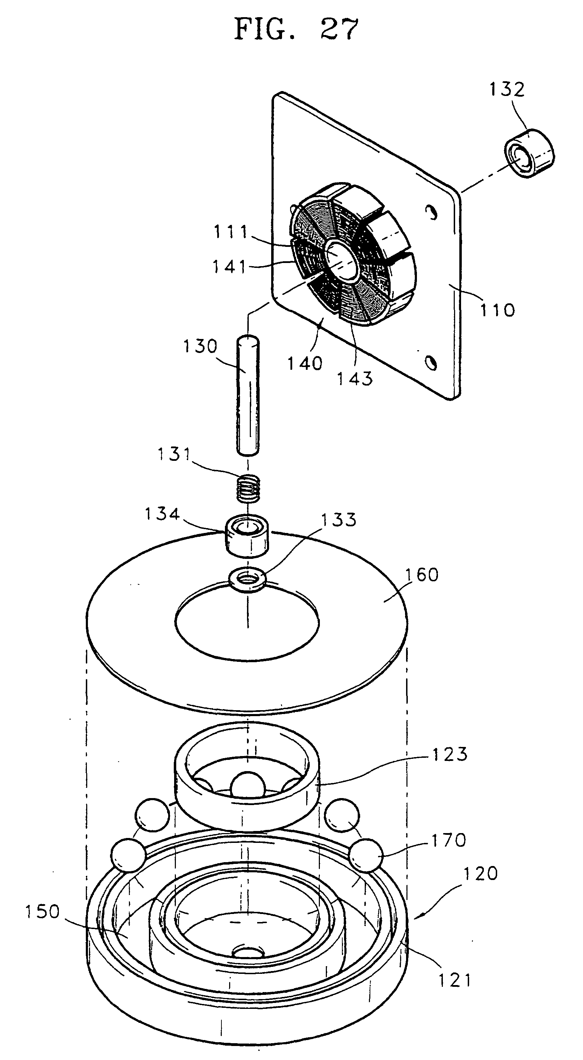

A spindle motor for use with a self-compensating dynamic balancer employed will now be described in detail with reference to Figures 27 through 30.

The self-compensating dynamic balancer can be installed at the deck plate 70 and rotates the turntable 200 coupled on the rotation shaft 130, as shown in Figure 2.

The spindle motor 100 according to a first embodiment includes a motor base 110, a rotation shaft 130, a stator 140, a rotor 120, first and second bearings 132 and 134, a circular race 150 integrally formed inside the rotor 120, a mobile unit 170 installed inside the race 150, and a cover member 160 for covering the opening of the race 150.

The motor base 110 is coupled with the deck plate 70 (see Figure 2) and has a through hole 111. The rotation shaft 130 together with the bearings 132 and 134 inserts into the through hole 111.

The stator 140 is fixed to the bottom surface of the motor base 110 and includes a yoke 141 facing the rotor 120 and a coil member 143 disposed at the inner side of the yoke 141. The bearings 132 and 134 which are disposed between the through hole 111 and the shaft 130 support the shaft 130 in the radial and axial directions thereof. Accordingly, a pair of the bearings 132 and 134 are provided and disposed inside the through hole 111 separated by a predetermined distance. That is, the inner ring of the first bearing 132 is fixed to the rotation shaft 130 and the outer ring thereof is fixed within-the through hole 111 so movements in the radial and axial directions of the rotation shaft 130 are prevented. The second bearing 130 is inserted into the through hole 111 to. be capable of sliding therein in order to prevent the rotation shaft 134 from being angled. An elastic member 131 is disposed inside the through hole 111 between the first bearing 132 and the second bearing 134 to alleviate the rotational vibration of the rotor 120 being transmitted to the motor base 110. It is preferable to use a metal bearing as the bearings 132 and 134 considering the positional accuracy necessary for high-speed rotation. Also, it is possible to employ other types of bearings such as a ball bearing or a dynamic pneumatic bearing.

The rotor 120 includes a case 121 fixed to one end of the rotation shaft 130 and installed to enclose the stator 140 and a magnet 123 fixed inside the case 121 to surround the yoke 141. Here, a fixing member 133 is further included at the coupling between the case 121 and the rotation shaft 130 to prevent the rotation shaft 130 from slipping off or running idly with respect to the case 121.

The race 150 is formed integrally with the case 121, and inside the case 121, concentric with the rotation shaft 130. The mobile unit 170 is installed to be capable of moving inside the race 150 and moves toward the outer circumference of the race 150 due to a centrifugal force generated during the rotation of the case 121. The cover member 160 covers the opening of the race 150.

The cover member 160 and the race 150 are coupled using an adhesive, a groove and protrusion assembly formed at corresponding positions, or screws.

The opening of the race 150 can be formed throughout the entire surface of the upper surface of the race 150, as shown in the drawing, or formed as part of the upper surface of the race 150, in a size large enough to insert the mobile unit 170 into the race 150.

The mobile unit 170 consists of a plurality of the rigid bodies 171 and may further include a fluid 180 installed to be capable of moving away from the rotation center of the rotor 120 inside the race 150 during the rotation of the rotor 120.

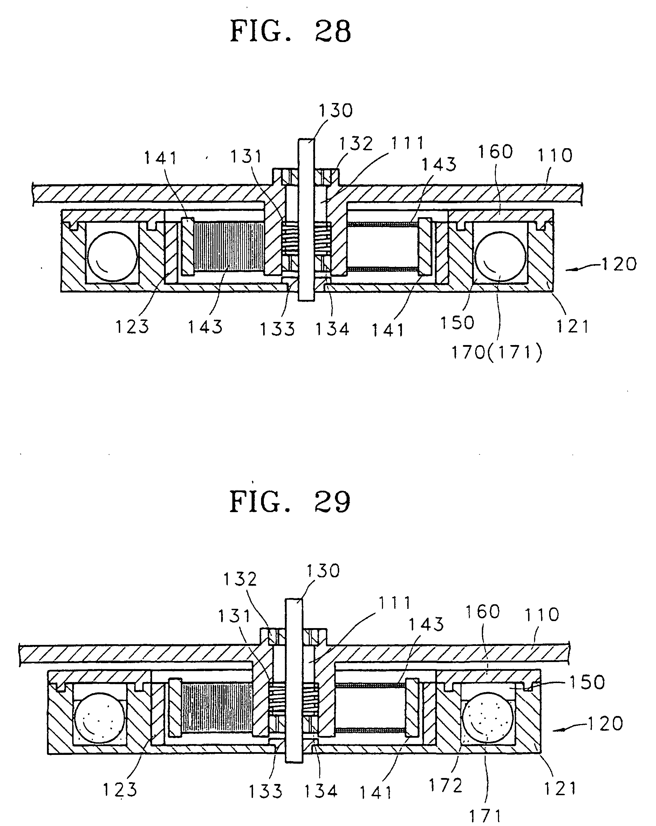

Figures 27 and 28 show a case in which a plurality of rigid bodies 171 are included as the mobile unit 170 inside the race 150. The rigid body 171 is installed to be capable of freely rolling or sliding such that the position of the rigid body 171 can be determined according to the centrifugal force generated during the rotation of the rotor 120.

It is preferable that the rigid body 171 is spherical, cylindrical, has a truncated conic shape, or is a fan-shaped block, as shown in Figures 9 through 12. Further, the shape of the rigid body 171 may be modified on the condition that the rigid body 171 can freely move inside the race 150.

As shown in Figure 29, the fluid 172 can be included along with the rigid body 171 as the mobile unit 170. Since the fluid 180 has a large contact area with respect to the race 150 and the cover member 160 and exhibits very high viscosity compared to the rigid body 171, the fluid 172 employed with the rigid body 171 inside the race 150 can effectively compensate for an internal vibratory force generated due to an eccentric center of gravity of the disk 1 (see Figure 2).

Here, it is preferable that the rigid body 171 is formed of a non-magnetic substance to be free from influence of the magnetic force of the magnet 123 (see Figure 4), so that the movement of the rigid body 171 is determined dependent on the eccentric center of gravity position of the disk 1 and the rotation of the rotor 120.

Also, the rigid body 171 is preferably formed of a non-oxidizing substance or is anti-oxidation coated to prevent the smooth rolling or sliding of the rigid body 171 inside the race 150 from being hindered by oxidation, i.e., corrosion. Also, the rigid body 171 can be formed of a substance having fine particles when oxidized in air, so that the movement of the rigid body 171 is not affected.

The shapes of a portion formed by the race 150 and the cover member 160 where the mobile unit 170 is placed is the same as those described earlier with reference to Figures 13 through 16.

Also, it is preferable that the case 121 including the race 150 and the cover member 160 are formed of a non-magnetic substance to be free from influence of a magnetic force generated between the rigid body 171 and itself.

Further, the case 121 is preferably formed of a non-oxidizing substance or is anti-oxidation coated.

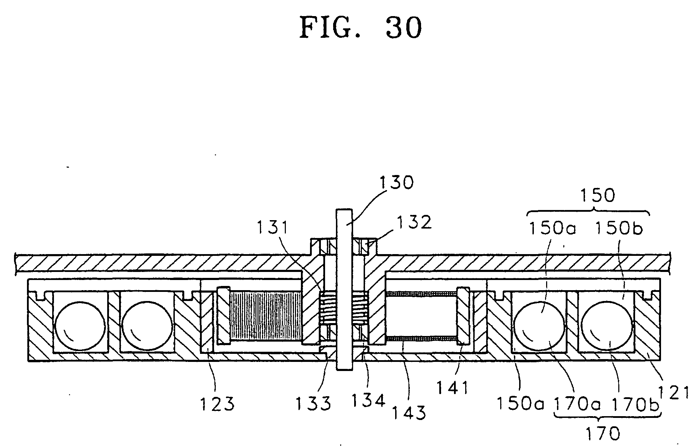

Referring to Figure 30, a spindle motor 100 incorporating for use with the second embodiment of the self-compensating dynamic balancer will now be described.

As shown in the drawing, the spindle motor 100 includes a rotation shaft 130, a motor base 110, bearings 132 and 134, a stator 140, a rotor 120, a circular race 150 formed inside the rotor 120 and concentric with the rotation shaft 130, a mobile unit 170 installed to be capable of moving inside the race 150, and a cover member 160 for covering an opening of the race 150.

Here, the first and second races 150a and 150b are formed adjacent to each other and concentric with the rotor 120 are provided as the race 150, which distinguishes it from the above-described first embodiment.

Since the shape and material of the mobile unit 170, the race 150 and the cover member 160 are the same as those described above, a detailed description thereof will be omitted.

Here, it is preferable that the weights of mobile units 170a and 170b installed in the first and second races 150a and 150b, respectively, are different from each other.

This is because of the consideration that a centrifugal force applied to the case 121 during rotation of the rotor 120 is proportional to the mass of each of the respective mobile units 170a and 170b and the distance between the center of the mobile unit 170 and the rotation center of the rotor 120. That is, the diameter of the first and second races 150a and 150b and the mass of the mobile unit 170a and 170b are determined considering the allowable error of the eccentric center of gravity of the disk 1 (see Figure 2).

Although a spindle motor 100 having two races 150a and 150b is shown in Figure 30, it is possible to provide a spindle motor incorporating a self-compensating dynamic balancer 100 with two or more races.

As shown in Figure 2, a disk player preferably includes the deck base 50, the deck plate 70, the buffering member 60, the spindle motor 100, the turntable 200 and the clamper 300. Here, the turntable incorporating a self-compensating dynamic balancer 200 is employed as the turntable, as shown in Figures 19 through 21.

Alternatively, in a second preferred embodiment, the disk player is substantially the same as that of the first embodiment, but a clamper incorporating a self-compensating dynamic balancer 300 as described with reference to Figures 22 through 26 is employed.

Also, a disk player according to a third embodiment is substantially same as that of the first and second embodiments, but the spindle motor for use with a self-compensating dynamic balancer 100 as described with reference to Figures 27 through 30 is employed.

Further, in the disk player as described above, the self-compensating dynamic balancer 400 can be integrally formed with not just one of the rotating members such as the turntable 200, and the clamper 300 but also two or more of the rotating members considering the rotational speed of the disk 1 (see Figure 2) and the scope of the allowable error of the position of the eccentric center of gravity.

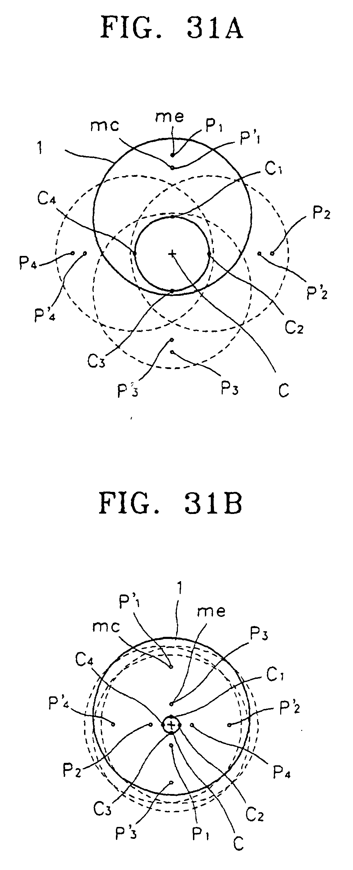

Hereinafter, the effects of vibration reduction generated when the disk player incorporating a self-compensating dynamic balancer and the rotating members incorporating a self-compensating dynamic balancer, i.e., the turntable 200, the clamper 300 and the spindle motor 100, are operated, will be described with reference to Figures 31A and 31B.

When the angular frequency of the disk 1 is equal to or less than the natural frequency, as shown Figure 31A, the position (pᵢ, i=1, 2, 3 and 4) of the eccentric center of gravity mₑ of the disk 1 and the position (p'ᵢ, i=1, 2, 3 and 4) of a compensated mass m_{c}, i.e., the center of gravity of the self-compensating dynamic balancer including the race, the mobile unit and the cover member, are located opposite the revolution center c, with respect to the corresponding positions (cᵢ, i=1, 2, 3 and 4) of the rotation shaft. Thus, the degree of eccentricity of the rotation becomes large.

However, when the angular frequency of the disk 1 is much greater than the natural frequency as when the disk rotates at a normal speed, as shown Figure 31B, the revolution center c and the position (pi, i=1, 2, 3 and 4) of the eccentric center of gravity mₑ of the disk 1 are located in the same direction with respect to the rotation shaft, and the position (p'ᵢ, i=1, 2, 3 and 4) of the compensated mass m_{c} is located in the opposite direction due to the centrifugal force. Thus, an unbalanced. state generated due to the eccentric center of gravity mₑ of the disk 1 is compensated for and the eccentricity of rotation of the rotation shaft is drastically reduced. Consequently, the internal vibratory force of the deck plate due to the eccentric center of gravity mₑ of the disk 1 is alleviated.

As described above, the disk player incorporating a self-compensating dynamic balancer, the spindle motor and the rotating members rotated by the spindle motor compensates for the internal vibration generated due to the eccentric center of gravity of a disk, by generating a centrifugal force directed from the orbital center of the disk radially outward which is generated by the mobile unit inside the race. Therefore, the internal vibration generated by the orbital rotation of the eccentric center of gravity of the disk can be effectively limited.

Also, the disk player employing a buffering member exhibiting a weak rigidity can alleviate external impacts. Thus, the disk player described above is appropriate for a high-speed CD drive of greater than 6X-speed, a CD-ROM drive, or a DVD drive.

## Claims

1. A self-compensating dynamic balancer apparatus for a disk player having rotational components (100,200,300) for rotating a disk (1) about a rotation axis to record and reproduce information from the disk (1), said apparatus comprising:
a self-compensating dynamic balancer (400) locatable co-axial with said rotational axis to rotate in use with at least one of said rotational components (100,200,300), said self-compensating dynamic balancer comprising a mobile unit (420,465) arranged to be freely movable within a non-magnetic hollow tube (410) by centrifugal force generated by rotation of said disk such that the center of gravity of said self-compensating dynamic balancer (400) moves to be located opposite to the center of gravity of said disk (1) with respect to said rotational axis; and
**characterised in that**:
said mobile unit (420) includes at least one rigid body (430).

2. An apparatus as claimed in claim 1, wherein said mobile unit (420) further comprises a fluid (440) capable of moving within said tube (410).

3. An apparatus as claimed in claim 2, wherein said fluid is arranged to coat said at least one rigid body to reduce friction between said at least one rigid body and said hollow tube.

4. An apparatus as claimed in claim 1 or 2, wherein said tube (410) is formed of a body (412) having a race (450) in which said mobile unit (420) is disposed and a cover member (413) which covers said race by coupling to said body.

5. An apparatus as claimed in any of claims 1,2,3 or 4, comprising at least two circular tubes (410a, 410b) which are arranged to be concentric and adjacent to each other and have mobile units (420a, 420b) located in the respective tubes.

6. An apparatus as claimed in claim 5, wherein, when there is more than one tube (410a, 410b), the weights of said rigid bodies (430a, 430b) located in the respective tubes (410a, 410b) differ from each other.

7. An apparatus as claimed in any of claims 1 to 6, wherein said rigid body (430) is formed into a shape selected from the group consisting of a spherical body (430) which can roll inside said race (450), a cylindrical body (430') which can roll with the outer circumferential surface thereof contacting the inner surface of the outer circular wall of said race, a truncated conic body (430") which can roll with the outer circumferential surface thereof contacting the bottom surface of said race, and a fan-shaped block (430''') which can slide being in contact with the bottom surface or the outer circular wall of said race.

8. An apparatus as claimed in any of claims 1 to 7, wherein said rigid body (430) is formed of a non-magnetic material in order to avoid being influenced by a magnetic force.

9. An apparatus as claimed in claim 8, wherein said rigid body (430) is formed of a substance selected from the group consisting of tungsten carbide (WC), beryllium steel (CuBe), Hastelloy C-276, silicon nitride (Si₃N₄), zirconia (ZrO₂), brass, aluminium, austenite-series steel YHD50, a non-magnetic metal such as SUS300, SUS304 and SUS316, ceramic and a synthetic resin.

10. An apparatus as claimed in any of claims 1 to 8, wherein said rigid body (430) is formed of a non-oxidizing substance which does not corrode.

11. An apparatus as claimed in claim 10, wherein said rigid body (430) is formed of a substance selected from the group consisting of SUS300, ceramic and a synthetic resin.

12. An apparatus as claimed in any of claims 1 to 7, wherein the outer circumferential surface of said rigid body (430) is anti-oxidation coated.

13. An apparatus as claimed in claim 12, wherein said anti-oxidation coating is formed of one selected from the group consisting of zinc and nickel-chromium plated over a base material of carbon steel or chromium steel.

14. An apparatus as claimed in any of claims 2 to 12, wherein said fluid (440) comprises part of said mobile unit capable of moving in said tube such that the center of gravity thereof is located opposite to that of said disk (1) with respect to said rotation axis by a centrifugal force generated during rotation of said tube (410).

15. An apparatus as claimed in any of claims 1 through 14 wherein the cross section of said tube (410) enclosing said mobile unit (420) has a shape selected from the group consisting of a rectangular shape (450), an oval shape (450') having a longer axis in the latitudinal direction with respect to the rotation shaft, and an inwardly bulging polygonal shape 450") in which a portion of each side contacting said mobile unit bulges inward.

16. An apparatus as claimed in any preceding claim, wherein said tube enclosing said mobile unit (420) is formed of a substance selected from the group consisting of tungsten carbide (WC), beryllium steel (CuBe), Hastelloy C-276, silicon nitride (Si₃N₄), zirconia (ZrO₂), brass, aluminium, austenite-series steel YHD50, a non-magnetic metal such as SUS300, SUS304 and SUS316, ceramic and a synthetic resin.

17. An apparatus as claimed in any of claims 1 through 15, wherein said tube (450) enclosing said mobile unit (420) is formed of a non-oxidizing substance which does not corrode.

18. An apparatus as claimed in claim 17, wherein said tube (450) enclosing said mobile unit (420) is formed of a substance selected from the group consisting of SUS300, ceramic and a synthetic resin.

19. An apparatus as claimed in any of claim 1 through 18, wherein the surface of said tube (450) facing said mobile unit (420) is anti-oxidation coated.

20. An apparatus as claimed in claim 19, wherein said anti-oxidation coating is formed of one selected from the group consisting of zinc and nickel-chromium plated over a base material of carbon steel or chromium steel.

21. An apparatus as claimed in claim 1, comprising a support plate (461) and at least one pivoting plate (465) pivotably coupled (463) to said support plate (461).

22. An apparatus as claimed in any preceding claim, wherein said self-compensating dynamic balancer (400) is formed integrally with a turntable (200).

23. A turntable (200) incorporating a self-compensating dynamic balancer (400) as claimed in claim 22, comprising:
a placing member (210) having a coupling hole (240) which is coupled to a rotation shaft (130) of a motor (100) and a surface on which a disk is placed, said placing member (210) being rotated by rotation of said motor;
a coupling protrusion (220) which is formed on said placing member to project therefrom and onto which the center hole of a disk (1) fits;
at least one circular race (250) which is formed in said placing member (210) and rotates around the center of rotation of said placing member;
a mobile unit (270) which is placed inside said race to be capable of moving; and
a cover member (260) to covering an opening of said race.

24. A turntable incorporating a self-compensating dynamic balancer, as claimed in claim 23, wherein said coupling protrusion (220) includes an installation groove (230) which is formed inside the same and a magnet (235) which is inserted in said installation groove.

25. An apparatus as claimed in any of claims 1 to 21, wherein said self-compensating dynamic balancer (400) is formed integrally with a clamper (300).

26. A clamper (300) incorporating a self-compensating dynamic balancer, as claimed in claim 27, comprising:
a clamper main body (310);
a pressing unit (320) coupled to said clamper main body (310) for pressing a disk (1) placed on a turntable (200);
at least one annular race (350) which is formed in said clamper main body (310) and rotates around the center of rotation of said clamper main body;
a mobile unit (370) placed inside said race (350) to be capable of moving; and
a cover member (360) which covers an opening of said race.

27. A clamper incorporating a self-compensating dynamic balancer as claimed in claim 28, wherein the bottom surface of said clamper main body (310) contacts said disk (1), and said pressing unit (320) is a yoke member (321) which is coupled to the lower portion inside said clamper main body in order to press said disk by a magnetic attractive.force with a magnet (235) in said turntable (200).

28. A clamper incorporating a self-compensating dynamic balancer as claimed in claim 28, wherein said pressing unit (320) includes a pressing plate (324) installed at the bottom surface of said clamper main body (310) to be capable of moving up and down for pressing said disk (1), and an elastic member (325) which is interposed between said clamper main body and said pressing plate such that said pressing plate can elastically press against said disk.

29. An apparatus incorporating a self-compensating dynamic balancer, as claimed in any of claims 23 or 24, or claims 26, 27 or 28, wherein said placing member (210) and said cover member (260), or said clamper main body (210) and said cover member (360) or said case (121) and said cover member (160), respectively, are formed of a non-magnetic material in order to avoid being influenced by a magnetic force.

30. An apparatus incorporating a self-compensating dynamic balancer, as claimed in any of claims 23 or 24, or claims 26, 27 or 28, wherein said placing member (210) and said cover member (260), or said clamper main body (210) and said cover member (360) or said case (121) and said cover member (160), respectively, are formed of a substance selected from the group consisting of tungsten carbide (WC), beryllium steel (CuBe), Hastelloy C-276, silicon nitride (Si₃N₄), zirconia (ZrO₂), brass, aluminium, austenite-series steel YHD50, a non-magnetic metal such as SUS300, SUS304 and SUS316, ceramic and a synthetic resin.

31. An apparatus incorporating a self-compensating dynamic balancer, as claimed in any of claims 23 or 24, claims 26, 27 or 28, wherein said placing member (210) and said cover member (260), or said clamper main body (210) and said cover member (360) or said case (121) and said cover member (160), respectively, are formed of a non-oxidizing substance which does not corrode.

32. An apparatus incorporating a self-compensating dynamic balancer, as claimed in any of claims 23 or 24, or claims 26, 27 or 28, wherein said placing member (210) and said cover member (260), or said clamper main body (210) and said cover member (360) or said case (121) and said cover member (160), respectively, are formed of a substance selected from the group consisting of SUS300, ceramic and a synthetic resin.

33. An apparatus incorporating a self-compensating dynamic balancer, as claimed in any of claims 23 or 24, or claims 26, 27 or 28, wherein in said placing member (210) and said cover member (260), or said clamper main body (210) and said cover member (360) or said case (121) and said cover member (160), respectively, the surfaces facing said rigid body are anti-oxidation coated.

34. An apparatus as claimed in claim 33, wherein said anti-oxidation coating is formed of one selected from the group. consisting of zinc and nickel-chromium plated over a base material of carbon steel or chromium steel.

35. A disk player incorporating a self-compensating dynamic balancer as claimed in any one of claims 1 to 21, wherein the disk player comprises:
a deck base (50);
a deck plate (70) elastically coupled to said deck base (50);
a buffering member (60) interposed between said deck base and said deck plate for protecting said deck plate from external impacts;
a spindle motor (100) arranged on said deck plate for providing a rotational force to a disk (1);
a turntable (200) arranged on a rotation shaft (130) of said spindle motor for accommodating the disk;
a clamper (300) for holding the disk in place on said turntable; and
an optical pickup (75) coupled to said deck plate and capable of moving across the disk; and
said self-compensating dynamic balancer (400) is coupled to at least one among the spindle motor (100), the turntable (200) and the clamper (300) which are rotated by the rotational force provided by said spindle motor, the center of gravity thereof being located opposite to that of said disk (1) with respect to the rotation shaft (130) of said spindle motor by the centrifugal force generated during rotation of said disk (1).

## Patentansprüche

1. Selbstkompensierende dynamische Auswuchtvorrichtung für einen Plattenspieler, der über Rotationsbauteile (100, 200, 300) verfügt, um eine Platte (1) um eine Drehachse zu drehen und auf diese Weise Informationen auf die Platte (1) aufzuzeichnen und von dieser wiederzugeben, wobei die Vorrichtung enthält:
ein selbstkompensierendes dynamisches Auswuchtbauteil (400), das koaxial mit der Drehachse angeordnet werden kann, um sich während des Gebrauchs mit wenigstens einem der Rotationsbauteile (100, 200, 300) zu drehen, wobei das selbstkompensierende dynamische Auswuchtbauteil eine bewegliche Einheit (420, 465) enthält, die derart angebracht ist, daß sie sich innerhalb eines nicht magnetischen hohlen Rohres (410) durch die Zentrifugalkraft frei bewegen kann, die durch die Drehung der Platte erzeugt wird, so daß sich der Schwerpunkt des selbstkompensierenden dynamischen Auswuchtbauteils (400) derart bewegt, daß er dem Gravitationszentrum der Platte (1) im Bezug auf die Drehachse gegenüberliegt; und
**dadurch gekennzeichnet, daß**:
die bewegliche Einheit (420) wenigstens einen steifen Körper (430) enthält.

2. Vorrichtung nach Anspruch 1, wobei die bewegliche Einheit (420) weiterhin ein Fluid (440) enthält, das sich in dem Rohr (410) bewegen kann.

3. Vorrichtung nach Anspruch 2, wobei das Fluid derart angebracht ist, daß es den wenigstens einen steifen Körper überzieht, um die Reibung zwischen diesem wenigstens einen steifen Körper und dem hohlen Rohr zu verringern.

4. Vorrichtung nach Anspruch 1 oder 2, wobei das Rohr (410) aus einem Körper (412), der über einen Laufkanal (450) verfügt, in dem die bewegliche Einheit (420) angeordnet ist, und einem Abdeckelement (413) ausgebildet ist, das diesen Laufkanal abdeckt, indem es mit dem Körper verbunden ist.

5. Vorrichtung nach einem der Ansprüche 1, 2, 3 oder 4, enthaltend wenigstens zwei kreisförmige Rohre (410a, 410b), die konzentrisch und aneinandergrenzend angeordnet sind und über bewegliche Einheiten (420a, 420b) verfügen, sie sich in den entsprechenden Rohren befinden.

6. Vorrichtung nach Anspruch 5, wobei, wenn es mehr als ein Rohr (410a, 410b) gibt, die Gewichte der steifen Körper (430a, 430b), die sich in den jeweiligen Rohren (410a, 410b) befinden, voneinander unterscheiden.

7. Vorrichtung nach einem der Ansprüche 1 bis 6, wobei der steife Körper (430) in einer Gestalt ausgebildet ist, die aus der Gruppe gewählt ist, die aus einem kugelförmigen Körper (430), der im Laufkanal (450) rollen kann, einem zylindrischen Körper (430'), der so rollen kann, daß seine Außenumfangsfläche die Innenfläche der kreisförmigen Außenwand des Laufkanals berührt, einem kegelstumpfartigen, konischen Körper (430"), der derart rollen kann, daß seine Außenumfangsfläche die Bodenfläche des Laufkanals berührt, und einem fächerförmigen Block (430"') besteht, der in Kontakt mit der Bodenfläche oder der kreisförmigen Außenwand des Laufkanals gleiten kann.

8. Vorrichtung nach einem der Ansprüche 1 bis 7, wobei der steife Körper (430) aus einem nicht magnetischen Material besteht, um zu vermeiden, daß er durch eine Magnetkraft beeinflußt wird.

9. Vorrichtung nach Anspruch 8, wobei der steife Körper (430) aus einer Substanz besteht, die aus der Gruppe gewählt ist, die aus Wolframkarbid (WC), Berylliumstahl (CuBe), Hastelloy C-276, Siliziumnitrid (Si₃N₄), Zirkondioxid (ZrO₂), Messing, Aluminium, einem Austenitstahl YHD50, einem nicht magnetischen Metall, wie etwa SUS300, SUS304 und SUS316, Keramik und Kunstharz besteht.

10. Vorrichtung nach einem der Ansprüche 1 bis 8, wobei der steife Körper (430) aus einer nicht oxidierenden Substanz ausgebildet ist, die nicht korrodiert.

11. Vorrichtung nach Anspruch 10, wobei der steife Körper (430) aus einer Substanz ausgebildet ist, die aus der Gruppe gewählt ist, die aus SUS300, Keramik und einem Kunstharz besteht.

12. Vorrichtung nach einem der Ansprüche 1 bis 7, wobei die Außenumfangsfläche des steifen Körpers (430) eine Antioxidationsbeschichtung hat.

13. Vorrichtung nach Anspruch 12, wobei die Antioxidationsbeschichtung aus einem Element besteht, das aus der Gruppe gewählt ist, die aus Zink und Nickelchrom besteht, und auf ein Basismaterial aus Kohlenstoffstahl oder Chromstahl plattiert ist.

14. Vorrichtung nach einem der Ansprüche 2 bis 12, wobei das Fluid (440) einen Teil der beweglichen Einheit beinhaltet, die in der Lage ist, sich in dem Rohr derart zu bewegen, daß ihr Gravitationszentrum gegenüberliegend zu jenem der Platte (1) im Bezug auf die Drehachse durch eine Zentrifugalkraft angeordnet wird, die während der Drehung des Rohres (410) entsteht.

15. Vorrichtung nach einem der Ansprüche 1 bis 14, wobei der Querschnitt des Rohres (410), der die bewegliche Einheit umschließt (420) eine Form hat, die aus der Gruppe gewählt ist, die aus einer rechteckigen Form (450), einer ovalen Form (450'), die in der Längsrichtung im Bezug auf die Drehachse eine längere Achse hat, und einer nach innen gewölbten Polygonform (450") besteht, bei der ein Abschnitt jeder Seite, der die bewegliche Einheit berührt, nach innen gewölbt ist.

16. Vorrichtung nach einem der vorhergehenden Ansprüche, wobei das Rohr, das die bewegliche Einheit (420) umschließt, aus einer Substanz besteht, die aus der Gruppe gewählt ist, die aus die aus Wolframkarbid (WC), Berylliumstahl (CuBe), Hastelloy C-276, Siliziumnitrid (Si₃N₄), Zirkondioxid (ZrO₂), Messing, Aluminium, einem Austenitstahl YHD50, einem nicht magnetischen Metall, wie etwa SUS300, SUS304 und SUS316, Keramik und einem Kunstharz besteht

17. Vorrichtung nach einem der Ansprüche 1 bis 15, wobei das Rohr (450), das die bewegliche Einheit (420) umschließt, aus einer nicht oxidierenden Substanz besteht, die nicht korrodiert.

18. Vorrichtung nach Anspruch 17, wobei das Rohr (450), das die bewegliche Einheit (420) umschließt, aus einer Substanz besteht, die aus der Gruppe gewählt ist, die aus SUS300, Keramik und einem Kunstharz besteht.

19. Vorrichtung nach einem der Ansprüche 1bis 18, wobei die Oberfläche des Rohres (450), die der beweglichen Einheit (420) zugewandt ist, mit einer Antioxidationsschicht versehen ist.

20. Vorrichtung nach Anspruch 19, wobei die Antioxidationsschicht aus einem Element besteht, das aus der Gruppe gewählt ist, die aus Zink und Nickelchrom besteht, und auf ein Basismaterial aus Kohlenstoffstahl oder Chromstahl plattiert ist.

21. Vorrichtung nach Anspruch 1, enthaltend eine Trägerplatte (461) und wenigstens eine Schwenkplatte (465), die schwenkbar mit der Trägerplatte (461) verbunden ist (463).

22. Vorrichtung nach einem der vorhergehenden Ansprüche, wobei das selbstkompensierende dynamische Auswuchtbauteil (400) integral mit einem Plattenspieler (200) ausgebildet ist.

23. Plattenspieler (200) mit einem selbstkompensierenden dynamischen Auswuchtbauteil (400) nach Anspruch 22, enthaltend:
ein Ablageelement (210) mit einer Verbindungsbohrung (240), die mit einer Drehwelle (130) eines Motors (100) verbunden ist, und auf deren Oberfläche eine Platte abgelegt wird, wobei das Ablageelement (210) durch Drehung des Motors gedreht wird;
einen Verbindungsvorsprung (220), der am Ablageelement derart ausgebildet ist, das er von diesem hervorsteht, und auf den das Loch einer Platte (1) paßt;
wenigstens einen kreisförmiger Laufkanal (250), der im Ablageelement (210) ausgebildet ist und sich um das Drehzentrum des Ablageelementes dreht;
eine bewegliche Einheit (270), die im Laufkanal angeordnet ist, um sich bewegen zu können; und
ein Abdeckelement (260), das eine Öffnung des Laufkanals abdeckt.

24. Plattenspieler mit einem selbstkompensierenden dynamischen Auswuchtbauteil nach Anspruch 23, wobei der Verbindungsvorsprung (220) eine Befestigungsrille (230) aufweist, die im inneren desselben ausgebildet ist, sowie einen Magneten (235), der in dieser Befestigungsrille angebracht ist.

25. Vonichtung nach einem der Ansprüche 1 bis 21, wobei das selbstkompensierende dynamische Auswuchtbauteil (400) integral mit einer Klemmvorrichtung (300) ausgebildet ist.

26. Klemmvorrichtung (300) mit einem selbstkompensierenden dynamischen Auswuchtbauteil nach Anspruch 27, enthaltend:
einen Klemmhauptkörper (310);
eine Preßeinheit (320), die mit dem Klemmhauptkörper (310) verbunden ist, um eine Platte (1) anzudrücken, die auf einem Plattenspieler (200) liegt;
wenigstens einen ringförmigen Laufkanal (350), der im Klemmhauptkörper (310) ausgebildet ist und sich um das Drehzentrum des Klemmhauptkörpers dreht;
eine bewegliche Einheit (370), die im Laufkanal (350) derart angeordnet ist, daß sie sich bewegen kann; und
ein Abdeckelement (360), das eine Öffnung des Laufkanals bedeckt.

27. Klemmvorrichtung mit einem selbstkompensierenden dynamischen Auswuchtbauteil nach Anspruch 26, wobei die Bodenfläche des Klemmhaupikörpers (310) die Platte (1) berührt und die Preßeinheit (320) ein Jochelement (321) ist, das mit dem unteren Abschnitt im Klemmhauptkörper verbunden ist, um die Platte durch eine magnetische Anziehungskraft mit einem Magnet (235) im Plattenspieler (200) anzudrücken.

28. Klemmvorrichtung mit einem selbstkompensierenden dynamischen Auswuchtbauteil nach Anspruch 27, wobei die Preßeinheit (320) eine Preßplatte (324), die an der Bodenfläche des Klemmhauptkörpers (310) angebracht ist, um sich zum Andrücken der Platte (1) nach oben und nach unten zu bewegen, sowie ein elastisches Element (325) beinhaltet, das zwischen dem Klemmhauptkörper und der Preßplatte derart angeordnet ist, daß die Preßplatte elastisch gegen die Platte drücken kann.

29. Vorrichtung mit einem selbstkompensierenden dynamischen Auswuchtbauteil nach einem der Ansprüche 23 oder 24 oder der Ansprüche 26, 27 oder 28, wobei das Ablageelement (210) und das Abdeckelement (260) oder der Klemmhauptkörper (210) und das Abdeckelement (360) oder das Gehäuse (121) und das Abdeckelement (160) jeweils aus einem nicht magnetischen Material ausgebildet sind, um eine Beeinflussung durch eine Magnetkraft zu vermeiden.

30. Vorrichtung mit einem selbstkompensierenden dynamischen Auswuchtbauteil nach einem der Ansprüche 23 oder 24 oder der Ansprüche 26, 27 oder 28, wobei das Ablageelement (210) und das Abdeckelement (260) oder der Klemmhauptkörper (210) und das Abdeckelement (360) oder das Gehäuse (121) und das Abdeckelement (160) jeweils aus einer Substanz ausgebildet sind, die aus der Gruppe gewählt ist, die aus Wolframkarbid (WC), Berylliumstahl (CuBe), Hastelloy C-276, Siliziumnitrid (Si₃N₄), Zirkondioxid (ZrO₂), Messing, Aluminium, einem Austenitstahl YHD50, einem nicht magnetischen Metall, wie etwa SUS300, SUS304 und SUS316, Keramik und Kunstharz besteht.

31. Vorrichtung mit einem selbstkompensierenden dynamischen Auswuchtbauteil nach einem der Ansprüche 23 oder 24 oder der Ansprüche 26, 27 oder 28, wobei das Ablageelement (210) und das Abdeckelement (260) oder der Klemmhauptkörper (210) und das Abdeckelement (360) oder das Gehäuse (121) und das Abdeckelement (160) jeweils aus einer nicht oxidierenden Substanz ausgebildet sind, die nicht korrodiert.

32. Vorrichtung mit einem selbstkompensierenden dynamischen Auswuchtbauteil nach einem der Ansprüche 23 oder 24 oder der Ansprüche 26, 27 oder 28, wobei das Ablageelement (210) und das Abdeckelement (260) oder der Klemmhauptkörper (210) und das Abdeckelement (360) oder das Gehäuse (121) und das Abdeckelement (160) jeweils aus einer Substanz ausgebildet sind, die aus der Gruppe gewählt ist, die aus SUS300, Keramik und einem Kunstharz besteht.

33. Vorrichtung mit einem selbstkompensierenden dynamischen Auswuchtbauteil nach einem der Ansprüche 23 oder 24 oder der Ansprüche 26, 27 oder 28, wobei beim Ablageelement (210) und dem Abdeckelement (260) oder beim Klemmhauptkörper (210) und dem Abdeckelement (360) oder beim Gehäuse (121) und dem Abdeckelement (160) jeweils jene Flächen mit einer Antioxidationsbeschichtung versehen sind, die dem steifen Körper zugewandt sind.

34. Vorrichtung nach Anspruch 33, bei der die Antioxidationsbeschichtung aus einem Element der Gruppe ausgebildet ist, die aus Zink und Nickelchrom besteht, und auf ein Basismaterial aus Kohlenstoffstahl oder Chromstahl plattiert ist.

35. Plattenspieler mit einem selbstkompensierenden dynamischen Auswuchtbauteil nach einem der Ansprüche 1 bis 21, wobei der Plattenspieler umfaßt:
eine Grundplatte (50);
eine Aufbauplatte (70), die elastisch mit der Grundplatte (50) verbunden ist;
ein Pufferelement (60), das sich zwischen der Grundplatte und der Aufbauplatte befindet, um die Aufbauplatte vor Erschütterungen von außen zu schützen;
einen Spindelmotor (100), der an der Aufbauplatte angebracht ist, um die Platte (1) zu drehen;
einen Plattenspieler (200), der auf einer Drehwelle (130) des Spindelmotors angebracht ist, um die Platte aufzunehmen:
eine Klemmvorrichtung (300) zum Halten der Platte an der richtigen Stelle auf dem Plattenspieler; und
eine optische Abtasteinrichtung (75), die mit der Aufbauplatte verbunden und in der Lage ist, sich über die Platte zu bewegen; wobei
das selbstkompensierende dynamische Auswuchtbauteil (400) mit dem Spindelmotor (100) und/oder dem Plattenspeiler (200) und/oder der Klemmvorrichtung (300) verbunden ist, die durch die Drehkraft gedreht werden, die vom Spindelmotor erzeugt wird, wobei dessen Gravitationszentrum gegenüberliegend zu jenem der Platte (1) im Bezug auf die Drehwelle (130) des Spindelmotors durch die Zentrifugalkraft angeordnet wird, die während der Drehung der Platte (1) erzeugt wird.

## Revendications

1. Dispositif d'équilibrage dynamique à compensation automatique destiné à un lecteur de disque ayant des composants rotatifs (100, 200, 300) pour faire tourner un disque (1) autour d'un axe de rotation afin d'enregistrer sur le disque (1) et de reproduire des informations à partir de celui-ci, ledit dispositif comportant :
un dispositif d'équilibrage dynamique à compensation automatique (400) pouvant être positionné coaxial audit axe de rotation afin de tourner en utilisation avec au moins un desdits composants rotatifs (100, 200, 300), ledit dispositif d'équilibrage dynamique à compensation automatique comportant une unité mobile (420, 465) agencée pour être mobile librement dans un tube creux non-magnétique (410) par l'intermédiaire d'une force centrifuge générée par rotation dudit disque, de telle sorte que le centre de gravité dudit dispositif d'équilibrage dynamique à compensation automatique (400) se déplace pour être positionné opposé au centre de gravité dudit disque (1) par rapport audit axe de rotation, et
**caractérisé en ce que**
ladite unité mobile (420) comporte au moins un corps rigide (430).

2. Dispositif selon la revendication 1, dans lequel ladite unité mobile (420) comporte de plus un fluide (440) capable de se déplacer à l'intérieur dudit tube (410).

3. Dispositif selon la revendication 2, dans lequel ledit fluide est agencé pour recouvrir ledit au moins un corps rigide afin de réduire le frottement entre ledit au moins un corps rigide et ledit tube creux.

4. Dispositif selon la revendication 1 ou 2, dans lequel ledit tube (410) est constitué d'un corps (412) ayant une voie (450) dans laquelle est disposée ladite unité mobile (420), et un élément de recouvrement (413) qui recouvre ladite voie par couplage avec ledit corps.

5. Dispositif selon la revendication 1, 2, 3 ou 4, comportant au moins deux tubes circulaires (410a, 410b) qui sont agencés pour être concentriques l'un par rapport à l'autre et adjacents l'un à l'autre, et qui ont des unités mobiles (420a, 420b) positionnées dans les tubes respectifs.

6. Dispositif selon la revendication 5, dans lequel lorsqu'il y a plus d'un tube (410a, 410b), les poids desdits corps rigides (430a, 430b) positionnés dans les tubes respectifs (410a, 410b) diffèrent les uns des autres.

7. Dispositif selon l'une quelconque des revendications 1 à 6, dans lequel ledit corps rigide (430) est formé en une forme sélectionnée dans le groupe comportant un corps sphérique (430) qui peut rouler à l'intérieur de ladite voie (450), un corps cylindrique (430') qui peut rouler en ayant sa surface circonférentielle extérieure venant en contact avec la surface inférieure de la paroi circulaire extérieure de ladite voie, un corps conique tronqué (430") qui peut rouler en ayant sa surface circonférentielle extérieure venant en contact avec la surface inférieure de ladite voie, et un bloc en forme d'éventail (430''') qui peut coulisser en étant en contact avec la surface inférieure ou la paroi circulaire extérieure de ladite voie.

8. Dispositif selon l'une quelconque des revendications 1 à 7, dans lequel ledit corps rigide (430) est constitué d'un matériau non-magnétique pour éviter d'être influencé par une force magnétique.

9. Dispositif selon la revendication 8, dans lequel ledit corps rigide (430) est constitué d'une substance sélectionnée dans le groupe comportant du carbure de tungstène (WC), de l'acier au béryllium (CuBe), de l'Hastelloy C-276, du nitrure de silicium (Si₃N₄), de la zircone (ZrO₂), du laiton, de l'aluminium, de l'acier de série austénitique YHD50, un métal non-magnétique tel que SUS300, SUS304 et SUS316, de la céramique et une résine synthétique.

10. Dispositif selon l'une quelconque des revendications 1 à 8, dans lequel ledit corps rigide (430) est constitué d'une substance inoxydable qui ne se corrode pas.

11. Dispositif selon la revendication 10, dans lequel ledit corps rigide (430) est constitué d'une substance sélectionnée dans le groupe comportant SUS300, de la céramique et une résine synthétique.

12. Dispositif selon l'une quelconque des revendications 1 à 7, dans lequel la surface circonférentielle extérieure dudit corps rigide (430) est revêtue d'un revêtement anti-oxydation.

13. Dispositif selon la revendication 12, dans lequel ledit revêtement anti-oxydation est constitué d'un élément sélectionné dans le groupe comportant zinc et nickel-chrome, plaqué sur un matériau de base d'acier au carbone ou d'acier au chrome.

14. Dispositif selon l'une quelconque des revendications 2 à 12, dans lequel ledit fluide (440) comporte une partie de ladite unité mobile capable de se déplacer dans ledit tube, de telle sorte que son centre de gravité est positionné opposé à celui dudit disque (1) par rapport audit axe de rotation par l'intermédiaire d'une force centrifuge générée pendant une rotation dudit tube (410).

15. Dispositif selon l'une quelconque des revendications 1 à 14, dans lequel la coupe transversale dudit tube (410) enfermant ladite unité mobile (420) a une forme sélectionnée dans le groupe comportant une forme rectangulaire (450), une forme ovale (450') ayant un axe plus long dans la direction transversale par rapport à l'arbre de rotation, et une forme polygonale bombée vers l'intérieur (450") dans laquelle une partie de chaque côté venant en contact avec ladite unité mobile est bombée vers l'intérieur.

16. Dispositif selon l'une quelconque des revendications précédentes, dans lequel ledit tube enfermant ladite unité mobile (420) est constitué d'une substance sélectionnée dans le groupe comportant du carbure de tungstène (WC), de l'acier au béryllium (CuBe), de l'Hastelloy C-276, du nitrure de silicium (Si₃N₄), de la zircone (SrO₂), du laiton, de l'aluminium, de l'acier de série austénitique YHD50, un métal non-magnétique tel que SUS300, SUS304 et SUS316, de la céramique et une résine synthétique.

17. Dispositif selon l'une quelconque des revendications 1 à 15, dans lequel ledit tube (450) enfermant ladite unité mobile (420) est constitué d'une substance inoxydable qui ne se corrode pas.

18. Dispositif selon la revendication 17, dans lequel ledit tube (450) enfermant ladite unité mobile (420) est constitué d'une substance sélectionné dans le groupe comportant SUS300, de la céramique et une résine synthétique.

19. Dispositif selon l'une quelconque des revendications 1 à 18, dans lequel la surface dudit tube (450) en vis-à-vis de ladite unité mobile (420) est revêtue d'un revêtement anti-oxydation.

20. Dispositif selon la revendication 19, dans lequel ledit revêtement anti-oxydation est constitué d'un élément sélectionné dans le groupe comportant zinc et nickel-chrome, plaqué sur un matériau de base d'acier au carbone ou d'acier au chrome.

21. Dispositif selon la revendication 1, comportant une plaque de support (461) et au moins une plaque pivotante (465) couplée de manière pivotante (463) à ladite plaque de support (461).

22. Dispositif selon l'une quelconque des revendications précédentes, dans lequel ledit dispositif d'équilibrage dynamique à compensation automatique (400) est formé en un seul bloc avec un plateau tournant (200).

23. Plateau tournant (200) comportant un dispositif d'équilibrage dynamique à compensation automatique (400) selon la revendication 22, comportant :
un élément de mise en place (210) ayant un trou de couplage (240) qui est couplé à un arbre de rotation (130) d'un moteur (100), et une surface sur laquelle un disque est mis en place, ledit élément de mise en place (210) étant mis en rotation par la rotation dudit moteur,
une saillie de couplage (220) qui est formée sur ledit élément de mise en place pour faire saillie à partir de celui-ci, et sur laquelle s'agence le trou central d'un disque (1),
au moins une voie circulaire (250) qui est formée dans ledit élément de mise en place (210) et qui tourne autour du centre de rotation dudit élément de mise en place,
une unité mobile (270) qui est placée à l'intérieur de ladite voie pour être capable de se déplacer, et
un élément de recouvrement (260) pour recouvrir une ouverture de ladite voie.

24. Plateau tournant comportant un dispositif d'équilibrage dynamique à compensation automatique selon la revendication 23, dans lequel ladite saillie de couplage (220) comporte une gorge d'installation (230) qui est formée à l'intérieur de celle-ci, et un aimant (235) qui est inséré dans ladite gorge d'installation.

25. Dispositif selon l'une quelconque des revendications 1 à 21, dans lequel ledit dispositif d'équilibrage dynamique à compensation automatique (400) est formé en un seul bloc avec un dispositif de serrage (300).

26. Dispositif de serrage (300) comportant un dispositif d'équilibrage dynamique à compensation automatique selon la revendication 27, comportant :
un corps principal de dispositif de serrage (310),
une unité de pression (320) couplée audit corps principal de dispositif de serrage (310) pour exercer une pression sur un disque (1) placé sur un plateau tournant (200),
au moins une voie annulaire (350) qui est formée dans ledit corps principal de dispositif de serrage (310), et qui tourne autour du centre de rotation dudit corps principal de dispositif de serrage,
une unité mobile (370) placée à l'intérieur de ladite voie (350) pour être capable de se déplacer, et
un élément de recouvrement (360) qui recouvre une ouverture de ladite voie.

27. Dispositif de serrage comportant un dispositif d'équilibrage dynamique à compensation automatique selon la revendication 28, dans lequel la surface inférieure dudit corps principal de dispositif de serrage (310) vient en contact avec ledit disque (1), et ladite unité de pression (320) est un élément en forme d'étrier (321) qui est couplé à la partie inférieure à l'intérieur dudit corps principal de dispositif de serrage pour exercer une pression sur ledit disque par l'intermédiaire d'une force d'attraction magnétique à l'aide d'un aimant (235) situé dans ledit plateau tournant (200).

28. Dispositif de serrage comportant un dispositif d'équilibrage dynamique à compensation automatique selon la revendication 28, dans lequel ladite unité de pression (320) comporte une plaque de pression (324) installée au niveau de la surface inférieure dudit corps principal de dispositif de serrage (310) pour être capable de se déplacer vers le haut et vers le bas afin d'exercer une pression sur ledit disque (1), et un élément élastique (325) qui est interposé entre ledit corps principal de dispositif de serrage et ladite plaque de pression, de telle sorte que ladite plaque de pression peut exercer une pression de manière élastique contre ledit disque.

29. Dispositif comportant un dispositif d'équilibrage dynamique à compensation automatique selon l'une quelconque des revendications 23 ou 24, ou des revendications 26, 27 ou 28, dans lequel ledit élément de mise en place (210) et ledit élément de recouvrement (260), ou ledit corps principal de dispositif de serrage (210) et ledit élément de recouvrement (360) ou ledit carter (121) et ledit élément de recouvrement (160), respectivement, sont constitués d'un matériau non-magnétique pour éviter d'être influencés par une force magnétique.

30. Dispositif comportant un dispositif d'équilibrage dynamique à compensation automatique selon l'une quelconque des revendications 23 et 24, ou des revendications 26, 27 et 28, dans lequel ledit élément de mise en place (210) et ledit élément de recouvrement (260), ou ledit corps principal de dispositif de serrage (210) et ledit élément de recouvrement (360), ou ledit carter (121) et ledit élément de recouvrement (160), respectivement, sont constitués d'une substance sélectionnée dans le groupe comportant du carbure de tungstène (WC), de l'acier au béryllium (CuBe), de l'Hastelloy C-276, du nitrure de silicium (Si₃N₄), de la zircone (ZrO₂), du laiton, de l'aluminium, de l'acier de série austénitique YHD50, un métal non-magnétique tel que SUS300, SUS304 et SUS316, de la céramique et une résine synthétique.

31. Dispositif comportant un dispositif d'équilibrage dynamique à compensation automatique, selon l'une quelconque des revendications 23, 24, des revendications 26, 27 ou 28, dans lequel ledit élément de mise en place (210) et ledit élément de recouvrement (260), ou ledit corps principal de dispositif de serrage (210) et ledit élément de recouvrement (360) ou ledit carter (121) et ledit élément de recouvrement (160), respectivement, sont constitués d'une substance inoxydable qui ne se corrode pas.

32. Dispositif comportant un dispositif d'équilibrage dynamique à compensation automatique, selon l'une quelconque des revendications 23, 24, ou des revendications 26, 27 ou 28, dans lequel ledit élément de mise en place (210) et ledit élément de recouvrement (260), ou ledit corps principal de dispositif de serrage (210) et ledit élément de recouvrement (360), ou ledit carter (121) et ledit élément de recouvrement (160), respectivement, sont constitués d'une substance sélectionnée dans le groupe comportant SUS300, de la céramique et une résine synthétique.

33. Dispositif comportant un dispositif d'équilibrage dynamique à compensation automatique selon l'une quelconque des revendications 23, 24, ou des revendications 26, 27 ou 28, dans lequel dans ledit élément de mise en place (210) et ledit élément de recouvrement (260), ou ledit corps principal de dispositif de serrage (210) et ledit élément de recouvrement (360), ou ledit carter (121) et ledit élément de recouvrement (160), respectivement, les surfaces en vis-à-vis dudit corps rigide sont revêtues d'un revêtement anti-oxydation.

34. Dispositif selon la revendication 33, dans lequel ledit revêtement anti-oxydation est constitué d'un élément sélectionné dans le groupe comportant zinc et nickel-chrome, plaqué sur un matériau de base d'acier au carbone ou d'acier au chrome.

35. lecteur de disque comportant un dispositif d'équilibrage dynamique à compensation automatique selon l'une quelconque des revendications 1 à 21, dans lequel le lecteur de disque comporte :
une embase de platine (50),
une plaque de platine (70) couplée de manière élastique à ladite embase de platine (50),
un élément d'amortissement (60) interposé entre ladite embase de platine et ladite plaque de platine pour protéger ladite plaque de platine vis-à-vis d'impacts extérieurs,
un moteur d'axe (100) agencé sur ladite plaque de platine pour fournir une force de rotation à un disque (1),
un plateau tournant (200) agencé sur un arbre de rotation (130) dudit moteur d'axe afin de recevoir le disque,
un dispositif de serrage (300) pour maintenir le disque en place sur ledit plateau tournant, et
un lecteur optique (75) couplé à ladite plaque de plateau et capable de se déplacer à travers le disque, et
ledit dispositif d'équilibrage dynamique à compensation automatique (400) est couplé à au moins un élément parmi le moteur d'axe (100), le plateau tournant (200) et le dispositif de serrage (300) qui sont mis en rotation par la force de rotation fournie par ledit moteur d'axe, son centre de gravité étant positionné opposé à celui dudit disque (1) par rapport à l'arbre de rotation (130) dudit moteur d'axe par l'intermédiaire de la force centrifuge générée pendant une rotation dudit disque (1).
